# EUROPEAN PATENT SPECIFICATION

(11) **EP 3 841 364 B1**
(45) Date of publication and mention of the grant of the patent: **26.10.2022**
(21) Application number: 18762445.7
(22) Date of filing: 21.08.2018
(51) Int. Cl.: G01K 1/143, G01K 1/024, B65D 23/16, B65D 23/00, B65D 23/10, F25D 23/04, A47G 23/02, G01J 5/00, G01J 5/02, G01J 5/08, A47F 7/28, G01J 5/0875

(54) **DEVICE FOR MEASURING THE TEMPERATURE OF A BEVERAGE BOTTLE**
VORRICHTUNG ZUR MESSUNG DER TEMPERATUR EINER GETRÄNKEFLASCHE
DISPOSITIF DE MESURE DE LA TEMPÉRATURE D'UNE BOUTEILLE DE BOISSON

(43) Date of publication of application: 30.06.2021
(73) Proprietor: Electrolux Do Brasil S.A., 81.520-900 Curitiba (BR)
(72) Inventor: SILVA, Rodrigo Ferreira da, 81520-900 Curitiba-PR (BR); FILHO, Luis Fernando Zeni, 81520-900 Curitiba-PR (BR); PACHECO, Gabriel, 81520-900 Curitiba-PR (BR); FURMANN, Marcelo, 81520-900 Curitiba-PR (BR); STÅHL, Mauri, 81520-900 Curitiba-PR (BR); BADUY, Ramom Eduardo Gadens, 81520-900 Curitiba-PR (BR); SAIKAWA, Wesley, 81520-900 Curitiba-PR (BR); STELLA, Angela, 81520-900 Curitiba-PR (BR)
(74) Representative: Electrolux Group Patents
(86) International application number: PCT/BR2018/050296
(87) International publication number: WO 2020/037383

(56) References cited:
- WO-A1-2014/195721
- WO-A1-2016/151434
- CN-U- 208 432 340
- US-A- 4 773 549
- US-A- 5 358 128
- US-A1- 2006 026 971

## Description

### Field of the Invention

The present invention generally relates to a temperature measuring device. More particularly, the present invention relates to a device for measuring the temperature of a beverage bottle, such as a wine bottle. Even more particularly, the present invention relates to a device for measuring the temperature of a beverage bottle, such as a wine bottle, without having to open the beverage bottle and a refrigerating apparatus where the beverage bottle is stored during its cooling.

### Background Art

In order to fully appreciate the flavour of a beverage, it is often desirable to serve the beverage at a particular temperature.

This is especially true for certain types of beverages, for example alcoholic beverages such as beer, cider and mead, and particularly for wine.

For example, white and sparkling wines are generally best served at cooler temperatures which play up fresh, fruity aspects while minimizing sweetness. Red wines may taste too harsh when chilled, due to the presence of tannins. Red wines, in particular old reds, are thus preferably served at warmer temperatures that allow their flavours and aromas to unfold. Serving a wine at a serving temperature different from its ideal serving temperature may result in a suboptimal wine tasting experience - for example, a temperature that is too cool may prevent a wine from properly unfolding and may also chill the gustatory papillae on the tongue, thus inhibiting the ability to distinguish sweet and sour flavours and thus further diminishing the tasting experience.

In addition, different varietals of red and white wines may have different ideal serving temperatures. Wine producers often indicate proper serving temperatures on wine bottle labels, so that a consumer may enjoy the wine at the temperature best suited to its type and characteristics.

However, it is extremely difficult for a wine consumer to set and control the ideal serving temperature for each specific type of wine.

The Applicant is aware of the presence of prior art solutions for determining the temperature of a beverage.

Some prior art solutions are based on the common approach of placing a probe in physical contact with the beverage.

Some prior art solutions are instead based on the common approach of placing a temperature sensor in physical contact with the beverage bottle. For example, US 2006/026971 A1 discloses a system for determining and monitoring wine temperature. The system includes a housing, a first temperature sensor for sensing an ambient temperature and a second temperature sensor for sensing the temperature of a wine bottle, for example without opening the bottle. A processor processes the ambient temperature with the wine bottle temperature to determine the temperature of wine within the bottle. A user may select a target wine temperature, which may further be displayed. The system may fit around the neck of the wine bottle or over the cork of the wine bottle, or the system may be configured as a coaster. Sensors may be contact or non-contact sensors such as infrared sensors. In one embodiment, an infrared system for determining and monitoring wine temperature is provided as a bottle stopper that replaces the cork of a wine bottle.

Worth mentioning are also WO 2014/195721 A1, which discloses a wine bottle thermometer (200) comprising a resilient band (204) adapted to partially surround a wine bottle and a temperature sensor (206) in wireless communication with a display device (202), and WO 2016/151434 A1, which discloses a wine bottle thermometer (1) comprising a shell (3) fastened (4) to the neck of a bottle (2), said shell (3) comprising a temperature sensor (5), a light sensor (6), an inclination sensor (7), a memory (8), a processor, a power supply (10) and an antenna (11) to exchange data wirelessly with a portable electronic appliance (17).

### Summary of the Invention

The Applicant has noticed that the prior art solutions are not satisfactory.

In fact, the Applicant has understood that placing a probe in physical contact with the beverage, and particularly wine, can contaminate the beverage and alter its taste, for example due to residues left on the probe from measurements of prior beverages, or even detergents used to clean the probe between measurements.

The Applicant has also understood that the known prior art solutions based on placing a temperature sensor in physical contact with the beverage bottle are generally inadequate for measuring and achieving optimal beverage drinking temperatures.

Considering for example the above cited document US 2006/026971 A1, the solution disclosed in such a document only allows an approximate measurement of the temperature of the wine. In fact, when positioning the temperature sensor around the neck of the wine bottle or over the cork of the wine bottle, or at a base of the wine bottle, a non-uniform and non-planar surface of the wine bottle is "intercepted" by the temperature sensor (in that the bottle neck has a high curvature and the bottle base has an irregular shape, due to the presence of a punt that allows easily holding the beverage bottle and to catch sediments at the bottom), and hence temperature measurements typically do not comply with the degree of accuracy that wine tasting needs.

The present invention is addressed to overcome the above-mentioned, as well as other, issues.

In particular, one or more aspects of the present invention are indicated in the independent claims, with advantageous features of the same invention that are indicated in the dependent claims, whose text is incorporated herein *verbatim* by reference.

More specifically, an aspect of the present invention proposes a device comprising:
a first arm adapted to accommodate and retain a bottle neck of a beverage bottle, such as a wine bottle;
a second arm extending from the first arm, the second arm being configured to extend towards a bottle body of the beverage bottle when the device is mounted on the beverage bottle;
a temperature measuring unit housed in the second arm, the temperature measuring unit facing the bottle body when the device is mounted on the beverage bottle, and
a wireless communication unit coupled to the temperature measuring unit,
wherein the wireless communication unit is adapted to wirelessly communicate with a display unit arranged to provide an indication associated with the temperature of the beverage bottle as measured by the temperature measuring unit.

According to an advantageous embodiment of the present invention, the first arm comprises at least one hooking element for hooking the device to a support element thereby allowing the beverage bottle to be supported in a hanged position.

According to an advantageous embodiment of the present invention, the first arm comprises an adjustable clamping member, for accommodating and retaining the bottle neck of the beverage bottle.

According to an advantageous embodiment of the present invention, the first arm
comprises an opening for accommodating and retaining the bottle neck of the beverage bottle.

According to an advantageous embodiment of the present invention, said opening comprises a first portion for the passage of the bottle neck through it, and a second portion, reduced in size with respect to the first portion, for accommodating and retaining the bottle neck of the beverage bottle.

According to an advantageous embodiment of the present invention, said opening is an adjustable opening that is adjustable according to a size of the bottle neck, the device further comprising an adjustable clamping member defining said adjustable opening and retaining the bottle neck of the beverage bottle.

According to an advantageous embodiment of the present invention, the adjustable clamping member comprises:
- first and second semicircular portions moveable with respect to each other along a moving direction, a distance between the first and second semicircular portions along said moving direction defining said adjustable opening, and
- a locking system for locking in a releasable manner the first and second semicircular portions to each other around and in contact to and the bottle neck.

According to an embodiment not covered by the subject-matter of the claims, the device further comprises a release mechanism for allowing the user to selectively release the locking of the first and second semicircular portions.

According to an embodiment of the present invention, the adjustable clamping member comprises:
- first and second semicircular portions, a first end of the first semicircular portion being hinged to a first end of the second semicircular portion whereby the first and second semicircular portions are rotatable with respect to each other;
- a locking system for locking in a releasable manner a second end of the first semicircular portion to a second end of the second semicircular portion around and in contact to the bottle neck, a distance between the second ends of the first and second semicircular portions preferably defining said adjustable opening.

According to an embodiment not covered by the subject-matter of the claims, the adjustable clamping member comprises a tie adapted to be fitted into, and preferably engage, a receptacle to form a (e.g., releasable) ratchet mechanism, a fitting extent of the tie into the receptacle preferably defining said adjustable opening.

According to an embodiment not covered by the subject-matter of the claims, the adjustable clamping member comprises, preferably on at least part of a contact region thereof that in use is in contact with the bottle neck, a grip element for improving an adherence between the contact region and the bottle neck of the beverage bottle.

According to an embodiment of the present invention, the device arm comprises a flexible region for causing at least part of the second arm to resiliently flex with respect to the first arm thereby allowing the second arm to adapt to a size of the bottle body.

According to an embodiment not covered by the subject-matter of the claims, the flexible region comprises a region of the second arm having a thickness lower than the thickness of the rest of the second arm.

According to an embodiment not covered by the subject-matter of the claims, the flexible region comprises a hinging element preferably arranged between the first and second arms or between first and second regions of the second arm.

According to an embodiment not covered by the subject-matter of the claims, the flexible region comprises a region of the second arm having a flexible material overmolded thereon.

According to an embodiment of the present invention, the wireless communication unit is adapted to wirelessly communicate with a mobile computing apparatus, such as a smartphone, comprising said display unit.

According to an embodiment not covered by the subject-matter of the claims, the wireless communication unit is configured to wirelessly communicate based on at least one wireless communication mode among Wi-Fi communication, Bluetooth communication and radio frequency communication.

According to an embodiment not covered by the subject-matter of the claims, the wireless communication unit is configured to select the wireless communication mode based on a current distance between the device and the mobile computing apparatus.

According to an embodiment of the present invention, the device further comprises a temperature indicator located on the second arm and in wireless or wired communication with the temperature measuring unit and configured to provide said indication associated with the temperature of the beverage bottle as measured by the temperature measuring unit.

According to an embodiment of the present invention, the first and second arms define a substantially L-shaped profile of the device.

According to an embodiment not covered by the subject-matter of the claims, the at least one hooking element is in correspondence of a first free end of the first arm. The second arm advantageously has a first end coupled to a second end of the first arm preferably opposite to the first free end of the first arm; the second arm advantageously has a second free end opposite to the first end of the second arm.

According to an embodiment not covered by the subject-matter of the claims, the temperature measuring unit is located in intermediate position along the second arm, particularly closer to the second free end thereof than to the first end thereof.

According to an embodiment not covered by the subject-matter of the claims, the at least one hooking element is formed in a single piece with the first arm.

According to an embodiment not covered by the subject-matter of the claims, the first and second arms are made in a single piece.

According to an embodiment of the present invention, said indication associated with the temperature of the beverage bottle provided by the display unit comprises an indication that the beverage bottle has reached a target temperature.

Another aspect not covered by the subject-matter of the claims relates to a device adapted to be coupled to a beverage bottle, such as a wine bottle. The device preferably comprises one or more among:
a clamping member for accommodating and retaining the bottle neck of the beverage bottle,
at least one hooking element for hooking the device to a support element thereby allowing the beverage bottle to be supported in a hanged position;
a temperature measuring unit, the temperature measuring unit preferably facing the beverage bottle when the device is coupled to the beverage bottle, and
a wireless communication unit preferably coupled to the temperature measuring unit and preferably adapted to wirelessly communicate with a display unit preferably arranged to provide an indication associated with the temperature of the beverage bottle as measured by the temperature measuring unit.

According to an embodiment not covered by the subject-matter of the claims, the device further comprises at least one among:
a first part preferably comprising said at least one hooking element, and
a second part preferably adapted to accommodate said temperature measuring unit.

According to an embodiment not covered by the subject-matter of the claims, the first part of the device also comprises said clamping member.

According to an embodiment not covered by the subject-matter of the claims, the first part is in the form of a first arm, and the second part is in the form of a second arm preferably extending from the first arm towards a bottle body of the beverage bottle when the device is mounted on the beverage bottle.

According to an embodiment not covered by the subject-matter of the claims, the clamping member comprises an opening for accommodating and retaining the bottle neck of the beverage bottle.

According to an embodiment not covered by the subject-matter of the claims, said opening comprises a first portion for the passage of the bottle neck through it, and, preferably, a second portion, preferably reduced in size with respect to the first portion, for accommodating and retaining the bottle neck of the beverage bottle.

According to an embodiment not covered by the subject-matter of the claims, said opening is an adjustable opening that is adjustable preferably according to a size of the bottle neck, said clamping member being for example an adjustable clamping member defining said adjustable opening and retaining the bottle neck of the beverage bottle.

According to an embodiment not covered by the subject-matter of the claims, the adjustable clamping member comprises at least one among:
- first and second (*e.g*., semicircular) portions moveable with respect to each other along a moving direction, a distance between the first and second semicircular portions along said moving direction advantageously defining said adjustable opening, and
- a locking system for locking (*e.g*., in a releasable manner) the first and second semicircular portions to each other around, and preferably in contact to, the bottle neck.

According to an embodiment not covered by the subject-matter of the claims, the device further comprises a release mechanism for allowing the user to (*e*.*g*., selectively) release the locking of the first and second semicircular portions.

According to an embodiment not covered by the subject-matter of the claims, the adjustable clamping member comprises at least one among:
- first and second semicircular portions, a first end of the first semicircular portion being preferably hinged to a first end of the second semicircular portion whereby the first and second semicircular portions are rotatable with respect to each other;
- a locking system for locking (for example in a releasable manner) a second end of the first semicircular portion to a second end of the second semicircular portion around (and preferably in contact to) the bottle neck, a distance between the second ends of the first and second semicircular portions preferably defining said adjustable opening.

According to an embodiment not covered by the subject-matter of the claims, the adjustable clamping member comprises a tie adapted to be fitted into (and preferably engage) a receptacle to form a (*e.g*., releasable) ratchet mechanism, said tie preferably defining said adjustable opening.

According to an embodiment not covered by the subject-matter of the claims, the adjustable clamping member comprises, preferably on at least part of a contact region thereof that in use is in contact with the bottle neck, a grip element for improving an adherence between the contact region and the bottle neck of the beverage bottle.

According to an embodiment not covered by the subject-matter of the claims, the device comprises a flexible region for causing at least part of the second arm to resiliently flex with respect to the first arm thereby allowing the second arm to adapt to a size of the bottle body.

According to an embodiment not covered by the subject-matter of the claims, the flexible region comprises a region of the second arm having a thickness lower than the thickness of the rest of the second arm.

According to an embodiment not covered by the subject-matter of the claims, the flexible region comprises a hinging element preferably arranged between the first and second arms or between first and second regions of the second arm.

According to an embodiment not covered by the subject-matter of the claims, the flexible region comprises a region of the second arm having a flexible material overmolded thereon.

According to an embodiment not covered by the subject-matter of the claims, the wireless communication unit is adapted to wirelessly communicate with a mobile computing apparatus, such as a smartphone, comprising said display unit.

According to an embodiment not covered by the subject-matter of the claims, the wireless communication unit is configured to wirelessly communicate based on at least one wireless communication mode among Wi-Fi communication, Bluetooth communication and radio frequency communication.

According to an embodiment not covered by the subject-matter of the claims, the wireless communication unit is configured to select the wireless communication mode based on a current distance between the device and the mobile computing apparatus.

According to an embodiment not covered by the subject-matter of the claims, the device further comprises a temperature indicator preferably located on the device and preferably in wireless or wired communication with the temperature measuring unit; the temperature indicator is advantageously configured to provide said indication associated with the temperature of the beverage bottle as measured by the temperature measuring unit.

According to an embodiment not covered by the subject-matter of the claims, the first and second arms define a substantially L-shaped profile of the device.

According to an embodiment not covered by the subject-matter of the claims, the at least one hooking element is in correspondence of a first free end of the first arm, the second arm preferably having a first end coupled to a second end of the first arm preferably opposite to the first free end of the first arm. The second arm preferably has a second free end, preferably opposite to the first end of the second arm.

According to an embodiment not covered by the subject-matter of the claims, the temperature measuring unit is located in intermediate position along the second arm, particularly closer to the second free end thereof than to the first end thereof.

According to an embodiment not covered by the subject-matter of the claims, the at least one hooking element is formed in a single piece with the first arm.

According to an embodiment not covered by the subject-matter of the claims, the first and second arms are made in a single piece.

According to an embodiment not covered by the subject-matter of the claims, wherein said indication associated with the temperature of the beverage bottle provided by the display unit comprises an indication that the beverage bottle has reached the target temperature.

Another aspect of the present invention relates to a system comprising:
a device according to any one of the above embodiments covered by the claims adapted to be mounted on a beverage bottle, wherein the device comprises a temperature measuring unit facing the bottle body when the device is mounted on the beverage bottle, and a wireless communication unit coupled to the temperature measuring unit,
a beverage bottle database, and
a mobile computing apparatus, such as a smartphone, comprising a display unit, the mobile computing apparatus being preferably adapted to:
   - read a label on the beverage bottle;
   - access the beverage bottle database and retrieve from it a target temperature for the beverage bottle preferably according to the label being read on the beverage bottle;
   - wirelessly communicate with the wireless communication unit for receiving the temperature of the beverage bottle as measured by the temperature measuring unit, and
   - notify, for example by displaying on the display unit, an indication associated with the temperature of the beverage bottle as measured by the temperature measuring unit, said indication associated with the temperature of the beverage bottle comprising an indication of the temperature of the beverage bottle with respect to the target temperature.

According to an embodiment not covered by the subject-matter of the claims, said indication associated with the temperature of the beverage bottle comprises one or more among a current temperature of the beverage bottle, temperature of the beverage bottle below and/or above and/or within a specified temperature range, and estimated cooling time to reach the target temperature.

According to an embodiment not covered by the subject-matter of the claims, said beverage bottle database is a local database locally stored in the mobile computing apparatus or a remote database remotely accessed by the mobile computing apparatus.

A further aspect of the present invention relates to a refrigerating apparatus comprising a refrigerating compartment and a door for selectively closing the refrigerating compartment, wherein said door comprises an external surface that preferably forms an external appearance of the refrigerating apparatus, and an inner liner, opposite to said external surface and facing, when the door is closed the refrigerating compartment, the inner liner comprising one or more support elements for supporting one or more storage elements adapted to store products to be refrigerated, wherein the refrigerating apparatus comprises the device of any of the above embodiments, the device being adapted to be hung on said one or more support elements through the at least one hooking element.

### Brief Description of the Figures

One or more embodiments of the present invention, as well as further features and the related advantages, will be better understood with reference to the following detailed description, given purely by way of non-limitative example only, to be read in conjunction with the accompanying figures (wherein corresponding elements are indicated with the same or similar references and their explanation is not repeated for the sake of brevity). In particular:
**Figure 1A** shows side and front views of a device according to an embodiment of the present invention;
**Figure 1B** shows a perspective and partly exploded view of said device according to an embodiment of the present invention;
**Figure 1C** shows the device of **Figures 1A** and **1B** mounted on beverage bottles having different sizes, according to an embodiment of the present invention;
**Figure 2A** shows front and size views of a device according to another embodiment of the present invention;
**Figures 2B****,** **2C** and **2D** show a perspective view, a partly exploded perspective view, and a perspective view with partly removed parts, respectively, of a portion of the device of **Figure 2A****,** according to an embodiment of the present invention;
**Figures 3A** and **3B** show perspective side views of a device according to another embodiment of the present invention;
**Figure 3C** shows a perspective and partially exploded side view of the device of **Figures 3A** and **3B** according to an embodiment of the present invention;
**Figure 4A** shows a perspective side view of a device according to another embodiment of the present invention;
**Figures 4B** and **4C** show a view from above and a sectional view from above, respectively, of the device of **Figure 4A** according to an embodiment of the present invention;
**Figure 5A** shows a perspective view of a refrigerating apparatus on which the device of **Figures 1A** to **4C** may be supported in a hanged position, according to an embodiment of the present invention, and
**Figure 5B** shows a perspective view of a door of the refrigerating apparatus of **Figure 5A** and a device / beverage bottle assembly supported on it in the hanged position, according to an embodiment of the present invention.

### Description of Embodiments of the Invention

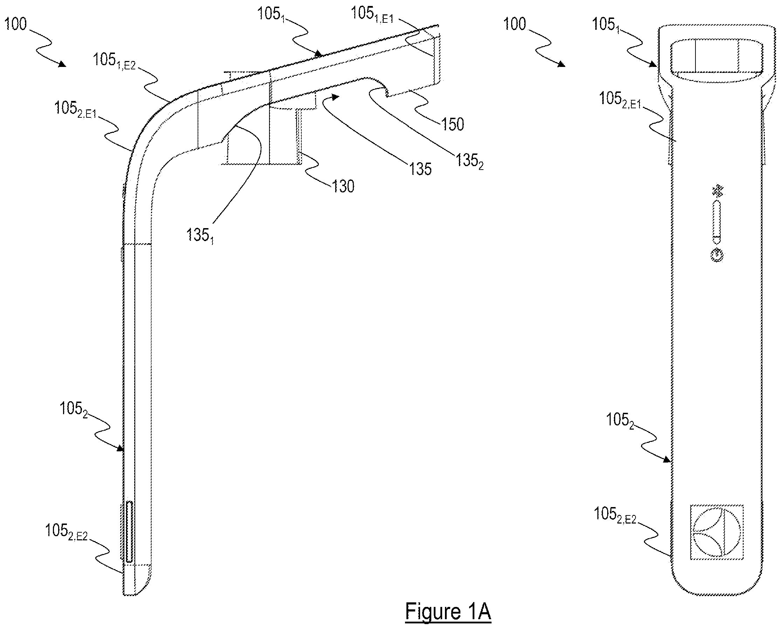

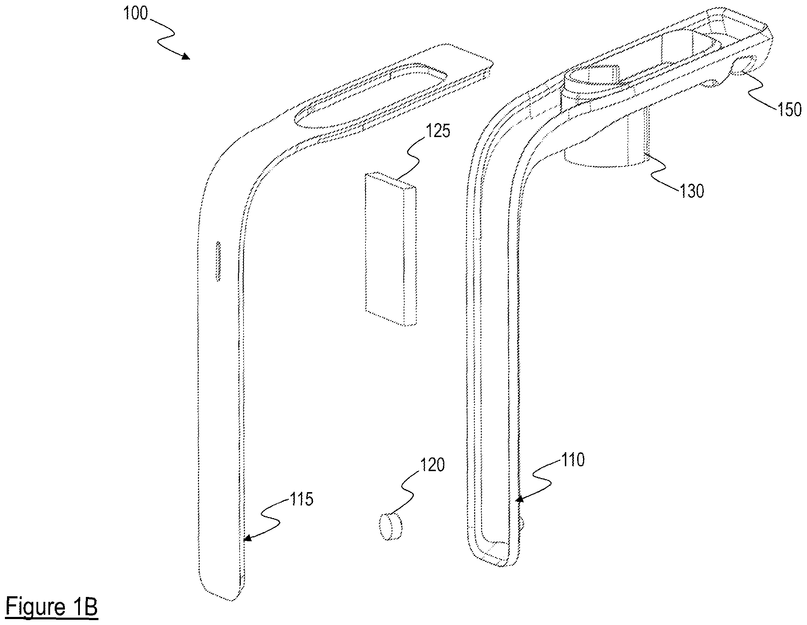

With reference to the drawings, **Figure 1A** shows side and front views of a device **100** according to an embodiment of the present invention, and **Figure 1B** shows a perspective and partly exploded view of the device **100** according to an embodiment of the present invention. Broadly speaking, the device **100** is an accessory adapted to be mounted on a beverage bottle (for example, a wine bottle) for measuring a temperature thereof and for providing a corresponding indication to a user (*e.g*., a consumer of the wine bottle). In the following, directional terminology (for example, outer, inner, longitudinal, vertical, transverse) associated with the device **100** and components or parts thereof will be used only in connection with their orientation in the figures, which is assumed to be their orientation of use (*i.e*., the orientation taken when the device **100** is mounted on the beverage bottle and the resulting device/bottle assembly is arranged in a refrigerating apparatus). Moreover, the term "substantially" will be used to take into account (desired or undesired) manufacturing tolerances.

The device **100** comprises a first arm **105₁** adapted to accommodate and retain a bottle neck of the beverage bottle (not shown in these figures), and a second arm **105₂** extending from the first arm and configured to extend towards a bottle body of the beverage bottle when the device **100** is mounted on the beverage bottle - the second arm **105₂** preferably extending to a substantially intermediate region of the bottle body, *i.e.* essentially in correspondence of a middle of bottle body.

Preferably, as illustrated, the first **105₁** and second **105₂** arms define a substantially L-shaped profile of the device **100**. The first arm **105₁** preferably identifies, in use, a substantially horizontal arm, and the second arm **105₂** preferably identifies, in use, a substantially vertical arm - for ease of description, from now on the first **105₁** and second **105₂** arms are will be roughly referred to as horizontal **105₁** and vertical **105₂** arms, respectively.

Preferably, the horizontal arm **105₁** comprises a first, free end **105_{1,E1}** (that, as better discussed in the following, is preferably associated with a hanging function of the device **100**) and a second end **105_{1,E2}** opposite to the first end **105_{1,E1}**, and the vertical arm **105₂** comprises a first end **105_{2,E1}** coupled to the second end **105_{1,E2}** of the horizontal arm **105₁**, and a second, free end **105_{2,E2}** opposite to the first end **105_{2,E1}** (in correspondence of which, as better discussed in the following, a temperature measuring function of the device **100** preferably takes place). The horizontal **105₁** and vertical **105₂** arms are advantageously made in a single piece.

As visible in **Figure 1B**, the device **100** preferably comprises an inner shell **110** that, when the device **100** is mounted on the beverage bottle, is (at least partially) in contact with the beverage bottle, and an outer shell **115** adapted to superimpose to and cover the inner shell **110**; the inner **110** and outer **115** shells are advantageously shaped such that, upon superimposition (and coupling) of the outer shell **115** onto the inner shell **110**, a gap is defined therebetween for housing one or more electronic components (*e.g*. including one or more among a temperature measuring unit, a wireless communication unit and wire electrical connections, as better discussed in the following).

Preferably, the inner shell **110** is made of a plastic and at least partially resilient material. More preferably, the inner shell **110** is made of a plastic material exhibiting suitable frictional properties when in contact with the beverage bottle. Even more preferably, the inner shell **110** (or at least most of it) is made of a substantially thermally insulating material, so as to protect the electronic components against issues associated with low temperature environments and conditions where rapid changes of temperature are expected (such as when the device/bottle assembly is placed in the refrigerating apparatus).

Preferably, the outer shell **115** comprises or is made of a rigid material. More preferably, the outer shell **115** (or at least a surface thereof that, when the device **100** is mounted on the beverage bottle, is visible to the user) comprises or is made of a material featuring aesthetical appeal for the user. Even more preferably, the outer shell **115** comprises or is made of stainless steel.

Advantageously, the inner **110** and outer **115** shells are coupled to each other by known molding or overmolding techniques.

As visible in **Figure 1B**, the inner **110** and outer **115** shells comprise each one respective horizontal and vertical arms, the horizontal arm of the inner shell **110** being preferably made in a single piece with the vertical arm of the inner shell **110**, and the horizontal arm of the outer shell **115** being preferably made in a single piece with the vertical arm of the outer shell **115.** When the inner **110** and outer **115** shells are superimposed and coupled to each other, the horizontal arms of the inner **110** and outer **115** shells identify, as a whole, the horizontal arm **105₁** of the device **100,** and the vertical arms of the inner **110** and outer **115** shells identify, as a whole, the vertical arm **105₂** of the device **100**.

In the following, reference will be mainly made to the horizontal **105₁** and vertical **105₂** arms of the device **100** (*i.e*. the horizontal arms of the inner **110** and outer **115** shells considered as a whole, and the vertical arms of the inner **110** and outer **115** shells considered as a whole), exception made when it will be necessary to distinguish between the horizontal and vertical arms of the inner shell **110** and the horizontal and vertical arms of the outer shell **115.** In any case, when referring to a feature or part or portion or element or region of the horizontal arm **105₁** or of the vertical **105₂** arm of the device **100,** that feature or part or portion or element or region is meant to be equivalently found, respectively, in both the horizontal arms of the inner **110** and outer **115** shells or in both the vertical arms of the inner **110** and outer **115** shells, unless otherwise indicated. Just as an example, the horizontal arms of the inner **110** and outer **115** shells comprise respective first and second ends that, when the inner **110** and outer **115** shells are superimposed and coupled to each other, identify as a whole the first **105_{1,E1}** and second **105_{1,E2}** ends of the horizontal arm **105₁**, respectively, of the device **100**; similarly, the vertical arms of the inner **110** and outer **115** shells comprise respective first and second ends that, when the inner **110** and outer **115** shells are superimposed and coupled to each other, identify as a whole the first **105_{2,E1}** and second **105_{2,E2}** ends of the vertical arm **105₂**, respectively, of the device **100**.

Preferably, the device **100** comprises a temperature measuring unit **120** housed in the vertical arm **105₂** for measuring, when the device **100** is mounted on the beverage bottle, the temperature of the beverage bottle (and hence of the beverage contained therein, in that a thermal equilibrium between the beverage bottle and the content is expected). More preferably, the temperature measuring unit **120** is located in an intermediate position along the vertical arm **105₂** of the device **100,** the temperature measuring unit **120** being for example located closer to the second end **105_{2,E2}** of the vertical arm **105₂** than to its first end **105_{2,E1}** (as visible in **Figure 1B**). Locating the temperature measuring unit **120** far or relatively far from the bottle neck and far or relatively far from a bottle base (due to the fact that the vertical arm **105₂** extends to a substantially intermediate region of the bottle body and to the fact that the temperature measuring unit **120** is located at the second end **105_{2,E2}** of the vertical arm **105₂**) is advantageous in that a more uniform and planar surface of the beverage bottle can be "intercepted" by the temperature measuring unit **120** in correspondence of the bottle body as compared to the surface of the beverage bottle provided at the bottle neck (which has a high curvature) or at the bottle base (which, due to the presence of a punt that allows easily holding the beverage bottle and to catch sediments at the bottom, has an irregular shape). Depending on the physical principle on which the temperature measuring unit **120** is based, a uniform and planar surface "intercepted" by the temperature measuring unit **120** may result in more accurate temperature measurements by the temperature measuring unit **120.**

Preferably, the temperature measuring unit **120** is accommodated on (for example, fixed to) the vertical arm of the inner shell **110**, and faces the bottle body when the device **100** is mounted on the beverage bottle.

According to the preferred embodiment of the present invention herein considered, the temperature measuring unit **120** is an infrared sensor, *i.e.* a sensor or thermometer which infers temperature from a portion of a thermal radiation (sometimes called black-body radiation) emitted by the object being measured. However, the temperature measuring unit **120** may be any sensor included in the family of thermal radiation thermometers.

According to a first implementation, in order to achieve efficient infrared radiation propagation between the temperature measuring unit **120** (*i.e*., an infrared transceiver section thereof) and the bottle body, an opening (not shown) may be provided in the vertical arm of the inner shell **110** for exposing at least the infrared transceiver section (with shape and size of the opening that preferably match shape and size of the infrared transceiver section).

According to a second implementation, in order to achieve efficient infrared radiation propagation between the temperature measuring unit **120** (*i.e.*, the infrared transceiver section thereof) and the bottle body, the infrared transceiver section of the temperature measuring unit **120** may face an infrared transparent window (*i.e*., a window made of a material that allows passage of the infrared radiation unaltered or essentially unaltered, not shown) provided in the vertical arm of the inner shell **110**, wherein shape and size of the infrared transparent window preferably match shape and size of the infrared transceiver section of the temperature measuring unit **120.** Advantageously, the infrared transparent window of the inner shell **110** comprises ZnSe - Zinc selenide.

According to an alternative embodiment of the present invention, the temperature measuring unit **120** is in thermal coupling with the bottle body when the device **100** is mounted on the beverage bottle. In this case, the temperature measuring unit **120** may for example be based on thermistors, such as NTC thermistors (*i.e.* resistors whose resistances decrease as temperature increase), the temperature measuring unit **120** being for example an integrated circuit comprising one or more thermistors as well as electronic circuits embedded in a package of plastic material, and a thermally conductive sensing pad (not shown) exposed on a surface of the package for allowing effective transfer of the heat information from the surface of the beverage bottle to the thermistor(s). The thermally conductive sensing pad of the temperature measuring unit **120** may for example comprise silicone, which ensures good thermal conductivity properties and exhibits a good surface contact with the bottle body (thereby accommodating surface imperfections of the material of the bottle body or of other components between the thermally conductive sensing pad and the bottle body). Preferably, the thermally conductive sensing pad of the temperature measuring unit **120** also comprises a thermally insulating portion, more preferably a thermally insulating perimeter portion surrounding the thermally conductive sensing pad, so as to avoid interference in the temperature sensing from air currents; just as an example, the thermally insulating portion may comprise a closed cell rubber tape.

According to a first implementation of the temperature measuring unit **120** in thermal coupling with the bottle body, in order to achieve efficient thermal coupling between the temperature measuring unit **120** and the bottle body, the thermally conductive sensing pad of the temperature measuring unit **120** faces and is in direct (and, hence, in both mechanical and thermal) contact with the bottle body; this may for example be achieved by means of an opening (not shown) provided in the vertical arm of the inner shell **110**, wherein shape and size of the opening preferably match shape and size of the thermally conductive sensing pad. Therefore, according to this implementation, the thermally conductive sensing pad of the temperature measuring unit **120** is exposed from the opening provided in the vertical arm of the inner shell **110**, and directly contacts the bottle body (with the above mentioned thermally insulating portion that may for example surround such an opening).

According to a second implementation of the temperature measuring unit **120** in thermal contact with the bottle body, in order to achieve efficient thermal coupling between the temperature measuring unit **120** and the bottle body, the thermally conductive sensing pad of the temperature measuring unit **120** may face and be in thermal contact with the bottle body without directly contacting it mechanically; this may for example be achieved by means of a thermally conductive window (not shown) provided in the vertical arm of the inner shell **110**, wherein shape and size of the thermally conductive window preferably match shape and size of the thermally conductive sensing pad (with the above mentioned thermally insulating portion that may for example surround such a thermally conductive window). Advantageously, the thermally conductive window of the inner shell **110** comprises silicone, which ensures good thermal conductivity properties and exhibits a good surface contact with the bottle body and with the thermally conductive sensing pad of the temperature measuring unit **120.**

Irrespective of the actual technology or principle used for measuring the temperature, a package of the temperature measuring unit **120** is advantageously coated (*e.g*., wholly or partially) with a coating for protecting it against problems associated with low temperature environments such as fridges and conditions where rapid changes of temperature are expected (such as high levels of condensation). The coating may for example be a conformal coating, which prevents ionizable contaminants such as salts from reaching the electronic circuits.

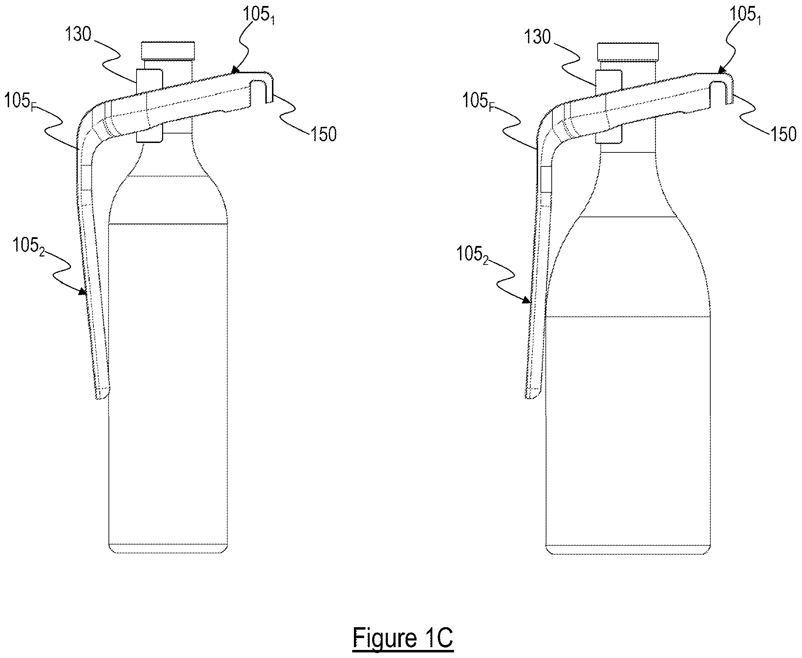

The vertical arm **105₂** of the device **100** preferably comprises a flexible region for causing at least part of the vertical arm **105₂** to resiliently flex with respect to the horizontal arm **105₁** thereby allowing the vertical arm **105₂** to adapt to the size of the bottle body and, hence, to achieve a very close distance or even adherence between the temperature measuring unit **120** and the bottle body - so as to obtain either an efficient optical coupling when the temperature measuring unit **120** is an infrared sensor, or an efficient thermal coupling when the temperature measuring unit **120** is based on thermistor(s). The resilient flexing of the vertical arm **105₂** with respect to the horizontal arm **105₁** in presence of beverage bottles with different bottle body sizes is shown in **Figure 1C** (the flexible region being denoted by the number reference **105_{F}** in this figure).

The resilient properties of flexible region advantageously allow the vertical arm **105₂** to be rotated with respect to the horizontal arm **105₂** from a rest (*i.e.*, absence of a bottle body), to an operative condition (*i.e*., presence of the bottle body), in which the rotation of the vertical arm **105₂** is essentially determined by the specific size of the bottle body (as visible in **Figure 1C**). The close distance or adherence between the temperature measuring unit **120** and the bottle body (in order to achieve efficient optical coupling or thermal coupling or contact therebetween) is determined by natural resilient rotation of the vertical arm **105₂** back to its rest condition.

According to an embodiment of the present invention, the flexible region **105_{F}** comprises a region of the vertical arm **105₂** having a thickness lower than the thickness of the rest of the second arm **105₂**. Additionally or alternatively, the flexible region **105_{F}** may comprise a hinging element, not shown, arranged between the horizontal **105₁** and vertical **105₂** arms or between regions of the vertical arm **105₂.** Additionally or alternatively, the flexible region **105_{F}** may comprise a region of the vertical arm **105₂** having a flexible material overmolded thereon (the flexible material for example surrounding both the inner **110** and outer **115** shells).

Irrespective of the specific implementation, the position of the flexible region **105_{F}** may take into account design options, such as length of the vertical arm **105₂** and/or position of the temperature measuring unit **120** along it.

Back to **Figure 1B**, the device **100** preferably comprises a wireless communication unit **125** coupled (*e.g*. by means of electric wires, not shown) to the temperature measuring unit **120** for receiving from it the measured temperature of the beverage bottle, and is adapted to wirelessly communicate with a display unit (or with an apparatus equipped with a display unit), not shown in this figure, arranged to provide an indication associated with the temperature of the beverage bottle as measured by the temperature measuring unit **120.**

An example of apparatus equipped with a display unit is a mobile computing apparatus, such as a smartphone (not shown in this figure), to which reference will be made from now on by way of example only.

As will be better discussed in the following, the wireless communication unit **125** may be configured to communicate with the smartphone for either notification purposes (such as for providing the measured temperature of the beverage bottle) or for setting purposes (such as for setting target or ideal serving temperatures or temperature ranges of the beverage bottle to be notified to the smartphone of the user, and/or for enabling power on and off of the device **100,** as better discussed below).

The wireless communication unit **125** may be configured to wirelessly communicate with the smartphone based on one or more wireless communication modes among Wi-Fi communication, Bluetooth^{™} communication and radio frequency communication. Advantageously, the wireless communication unit **125** supports all the above, as well as other, communication modes, and may communicate with the smartphone according to the communication mode(s) supported by the smartphone. More advantageously, the wireless communication unit **125** may communicate with the smartphone by means of the less energy consuming communication mode(s) supported by both the wireless communication unit **125** and the smartphone.

Additionally or alternatively, the wireless communication unit **125** may be configured to select the wireless communication mode based on a current distance between it (or, equivalently, the device **100**) and the smartphone. In order to achieve that, the communication between the wireless communication unit **125** and the smartphone may take place either directly by means of a short range wireless communication (such as Bluetooth^{™} communication or Wi-Fi direct communication) if the smartphone and the wireless communication unit **125** are within a maximum range supported by the short-range wireless communication, or indirectly by means of a medium or long-range wireless communication (such as a Wi-Fi or Cloud communication) if the smartphone and the wireless communication unit **125** are outside the maximum range supported by the short-range wireless communication.

As a further embodiment, additional or alternative to the above embodiments, the temperature measuring unit **120** may be in wireless or wired communication with a temperature indicator (not shown) of the device **100**. The temperature indicator is advantageously adapted to provide an indication associated with the temperature of the beverage bottle as measured by the temperature measuring unit **120** (and, preferably, information associated with the beverage bottle), and is preferably placed in a position of the device **100** that can be easily viewed by the user, such as on the horizontal arm **105₁** or, even better, on the vertical arm **105₂** (placing the temperature indicator on the vertical arm **105₂** is particularly preferred in the considered embodiments of the present invention, discussed in the following, in which the horizontal arm **105₁** is already intended to accomplish hooking and retaining functions). More preferably, the temperature indicator is placed on the horizontal arm or, even better, on the vertical arm of the outer shell **115** (which is the shell that, when the device **100** is mounted on the beverage bottle, is visible to the user).

The indication associated with the temperature of the beverage bottle provided by the temperature indicator may for example comprise one or more indications among a current temperature of the beverage bottle, a target temperature, a temperature of the beverage bottle below and/or above and/or within a specified temperature range, and/or an estimated cooling time to reach the target temperature when the device/bottle assembly is placed in the refrigerating apparatus; according to embodiments of the present invention, this one or more indications may be displayed by the temperature indicator in the form of texts and/or colors. The information associated with the beverage bottle preferably provided by the temperature indicator may for example comprise type of beverage and origin (*e.g*., country of production); according to embodiments of the present invention, this information may be displayed by the temperature indicator in the form of texts.

The device **100** may preferably comprise a power supply module, not shown, electrically coupled (*e.g.* by means of electric wires, not shown) to the wireless communication unit **125,** the temperature measuring unit **120** and the temperature indicator (if provided), for powering them (*i.e*., for supplying them with respective electric voltages and currents required for their operation). The power supply module may for example comprise a battery, for example a replaceable battery (not shown). Advantageously, a switch (not shown), for example a microswitch, may be provided for enabling the device **100** to be powered on and off to preserve battery life. More advantageously, the switch may be arranged such that it is in an open position (device **100** powered off) until it is depressed. Even more advantageously, the switch may be arranged such that when the device **100** is mounted on a beverage bottle and a close fit by between the device **100** and the beverage bottle is achieved, the close fit may cause the switch to be pressed thereby enabling power on of the device **100** (and, particularly, power on of the wireless communication unit **125,** of the temperature measuring unit **120** and, if provided, of the temperature indicator). Still more advantageously, one or more status indicators (not shown), for example one or more LED indicators, may be provided (for example, on the outer shell **110**) to indicate whether the device **100** has turned on correctly. Additionally or alternatively to the (mechanical) switch, the device **100** may be powered on and off remotely (*i.e*., without necessarily pressing and depressing a mechanical switch physically provided on the device **100**); by way of example only, in the considered example of a smartphone as a mobile computing apparatus equipped with the display unit, the device **100** may be wirelessly powered on and off by means of a dedicated function provided in an application run in the smartphone (discussed in the following).

As mentioned above, the horizontal arm **105₁** of the device **100** is adapted to accommodate and retain the bottle neck of the beverage bottle.

Preferably, the horizontal arm **105₁** of the device **100** comprises an opening for accommodating and retaining the bottle neck of the beverage bottle.

According to an embodiment of the present invention, not shown, said opening comprises an elongated through hole comprising a first hole portion for the passage of the bottle neck through it, and a second hole portion, advantageously reduced in size with respect to the first hole portion, for accommodating and retaining the bottle neck of the beverage bottle. The first and second hole portions may for example be obtained by through holes, having same or substantially same gradually narrowing elongated profiles, formed on the horizontal arms of the inner **110** and outer **115** shells (such that, upon superimposition and coupling of the inner **110** and outer **115** shells to each other the first and second hole portions are defined). In operation, the bottle neck of the beverage bottle is passed through the first (larger) hole portion and made to slid along the elongated through hole towards the second (narrower) hole portion, until the narrowing of the through hole prevents the bottle neck from further sliding thereby allowing the bottle neck to be retained by frictional engaging with the hole walls. Therefore, beverage bottles having bottle necks of different size may be accommodated and retained (the exact position, along the through hole, at which the bottler neck is retained depending for example on the size of the bottle neck and/or on the profile of the through hole).

According to an alternative embodiment of the present invention, the opening (or at least a portion thereof) is an adjustable opening that is adjustable according to the size of the bottle neck. Preferably, the device **100** further comprises an adjustable clamping member defining said adjustable opening and retaining the bottle neck of the beverage bottle.

An example of adjustable clamping member is shown in **Figures 1A** and **1B** and denoted by the number reference **130.** In this example, the adjustable clamping member **130** comprises a collar, preferably (as illustrated) a C-shaped collar, such that a distance between free ends of the C-shaped collar define the adjustable opening. The C-shaped collar is preferably formed in an elongated through hole **135** of the horizontal arm **105₁**, the C-shaped collar being preferably formed at a first end **135₁** of the elongated through hole **135** of the horizontal arm **105₁**. A second end **135₂** of the elongated through hole **135,** opposite to the first end **135₁**, is advantageously adapted to allow the passage of the bottle neck through it. Similarly to the above, the elongated through hole **135** of the horizontal arm **105₁** is advantageously obtained by corresponding elongated through holes formed on the horizontal and vertical arms of the inner **110** and outer **115** shells.

Preferably, the C-shaped collar is made of a material having both stiffness and resilient properties. More preferably the C-shaped collar is made of the same material as the inner shell **110** of the device **100,** the C-shaped collar being for example made in a single piece with the inner shell **110** of the device **100**. The resilient properties of the material of the C-shaped collar advantageously allow the C-shaped collar to be "enlarged" from a rest or closed or semi-closed condition (*i.e.*, absence of a bottle neck), in which the distance between the free ends of the C-shaped collar has a minimum value, to an operative condition (*i.e*., presence of a bottle neck, as shown in **Figure 1C**), in which the distance between the free ends of the C-shaped collar has a second value higher than the minimum value (and depending on the size of the bottle neck), the retaining action of the C-shaped collar being determined by natural resilient closing back of the free ends of the C-shaped collar to the rest condition. On the other side, the stiffness properties of the material of the C-shaped collar advantageously allow the C-shaped collar to rigidly retain the bottle neck of the beverage bottle.

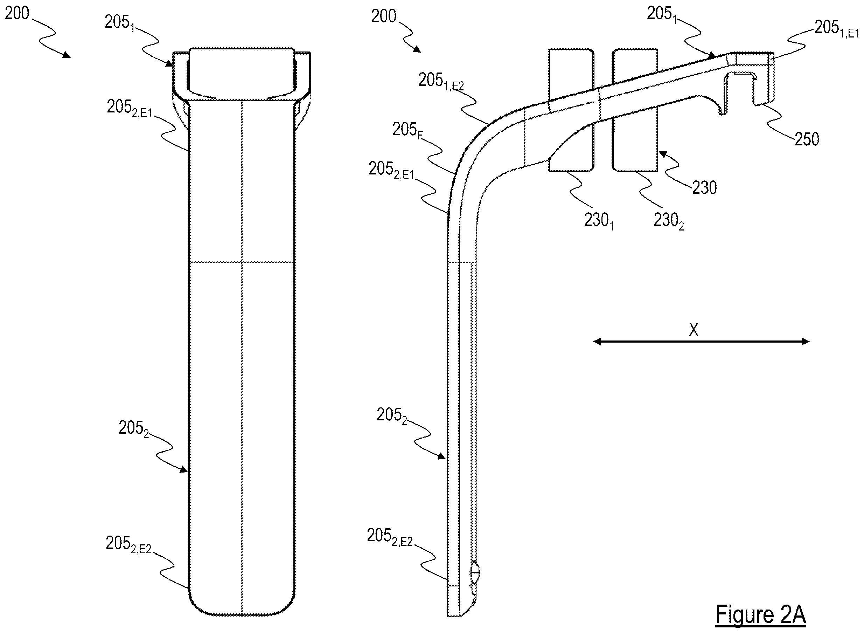

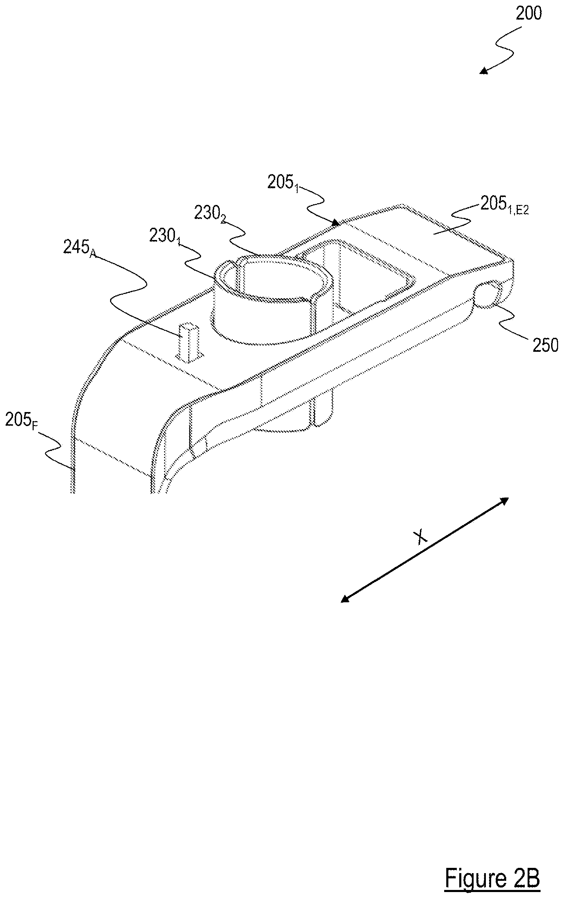

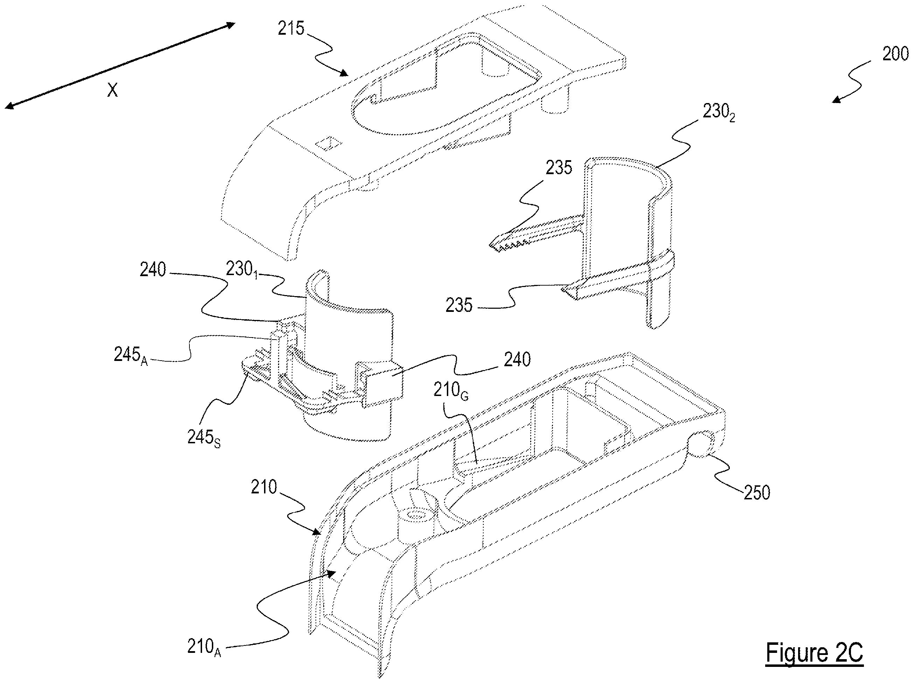

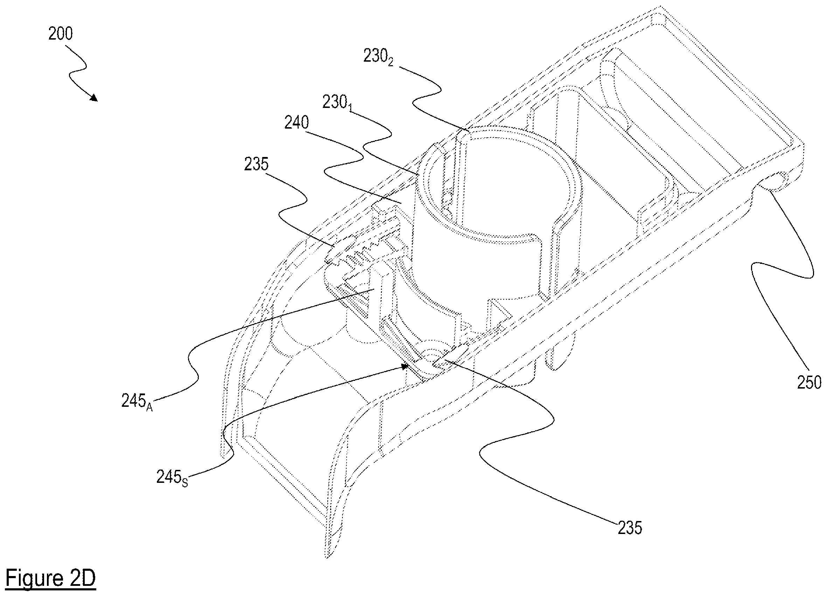

Another example of adjustable clamping member is shown in **Figures 2A-2D** and denoted by the number reference **230.** Particularly, **Figure 2A** shows front and side views of a device **200** according to another embodiment of the present invention (the device **200** being substantially equivalent to the device **100,** exception made for the adjustable clamping member **230** and for structural adaptations of the horizontal arm **205₁**, and particularly of inner **210** and outer **215** shells thereof, to the adjustable clamping member **230**), and **Figures 2B****,** **2C** and **2D** are a perspective view, a partly exploded perspective view, and a perspective view with partly removed parts, respectively, of a portion of the device **200** including the adjustable clamping member **230** (for ease of representation, the portion of the device **200** shown in **Figures 2B-2D** is strictly limited to parts of the horizontal arm **205₁** (and, hence, of parts of inner **210** and outer **215** shells thereof) having an actual interaction with the adjustable clamping member **230**).

As visible in the figures, the adjustable clamping member **230** comprises first **230₁** and second **230₂** semicircular portions (preferably each one in the form of a C-shaped collar) moveable with respect to each other along a longitudinal direction **X** (the longitudinal direction **X** being essentially the direction identified by the horizontal arm **205₁** and also representing, in this embodiment, the moving direction of the first **230₁** and second **230₂** semicircular portions), such that a distance between the first **230₁** and second **230₂** semicircular portions along the longitudinal direction **X** define the adjustable opening for accommodating and retaining the bottle neck of the beverage bottle.

Preferably, as herein assumed, the first semicircular portion **230₁** is fixed (whereby in the following it will be referred to as fixed semicircular portion **230₁**), whereas the second semicircular portion **230₂** is moveable with respect to the fixed semicircular portion **230₁** (whereby in the following it will be referred to as moveable semicircular portion **230₂**).

Preferably, as illustrated in **Figures 2C** and **2D****,** the adjustable clamping member **230** comprises a locking system for locking in a releasable manner the fixed **230₁** and moveable **230₂** semicircular portions to each other around and in contact to the bottle neck. More preferably, the locking system comprises one or more (preferably two) bars **235,** preferably made in a single piece with the moveable semicircular portion **230₂** and extending from respective sides thereof along the longitudinal direction **X,** and one or more (preferably, two) receptacles **240,** preferably made in a single piece with the fixed semicircular portion **230₁** and located at respective sides thereof.

Each receptacle **240** is preferably adapted to receive and engage a respective bar **235,** so as to lock the moveable semicircular portion **230₂** at a selected distance from the fixed semicircular portion **230₁**. The bars **235** and the respective receptacles **240** preferably define a ratchet mechanism: in order to achieve that, each bar **235** and each receptacle **240** preferably comprise mutually engaging barb surface portions (*i*.*e*., portions having surfaces including a number of barbs or projections or teeth) enabling engaging between the bar **235** and the respective receptacle **240** when the bar **235** is being fitted into the receptacle **240,** but preventing removal of the bar **235** out of the receptacle **240.** Therefore, the moveable semicircular portion **230₂** can be locked at a selected distance from the fixed semicircular portion **230₁** according to a fitting extent of the bars **235** into the respective receptacles **240.**

Advantageously, as illustrated, the locking system is associated with a release mechanism for allowing the user to selectively release the locking of the fixed **230₁** and moveable **230₂** semicircular portions. More advantageously, the release mechanism comprises an actuator **245_{A}** (*e.g*., a mechanical pin or rod) adapted to be actuated by the user at an actuation end thereof, and an arm structure **245_{S}** mechanically coupling an end of the actuator **245_{A}** opposite to the actuation end to the barb surface portions of each receptacle **240.** Therefore, upon actuation of the actuator **245_{A}** (*e.g*., by pushing it downwards), the action of the arm structure **245_{S}** allows the barb surface portions of the receptacles **240** to be pushed downwards, thereby disengaging them from the barb surface portions of the bars **235** and allowing the removal of the bars **235** out of the respective receptacles **240.**

The fixed **230₁** and moveable **230₂** semicircular portions are preferably arranged in, and preferably protrudes from, an elongated through hole of the horizontal arm **205₁**. More preferably, the inner shell **210** (and, particularly, the horizontal arm thereof) is advantageously provided (for example, at an end of the through hole of the inner shell **210**) with an accommodating portion **210_{A}** for accommodating the fixed semicircular portion **230₁** and the release mechanism **245_{A}**,**245_{S}** coupled thereto (the fixed semicircular portion **230₁** and the release mechanism **245_{A}**,**245_{S}** coupled thereto being for example kept in the fixed position upon superimposition and coupling between the inner **205** and outer **210** shells), and is advantageously provided (*e.g*., at sides of the through hole of the inner shell **210**) with horizontal or substantially horizontal guide portions **210_{G}** (only one visible in **Figure 2C**) for supporting the moveable semicircular portion **230₂** in correspondence of its bars **235** (with each bar **235** that preferably is supported by a respective guide portion **210_{G}**) and allowing the movement of the bars **235** along the longitudinal direction **X.**

As visible in **Figure 2C**, the actuator **245_{A}** preferably protrudes from the horizontal arm **205₁** (so that it can be actuated by the user), the actuator **245_{A}** for example passing through a corresponding, e.g. dedicated, through hole of the outer shell **215.**

Another example of adjustable clamping member may provide two semicircular portions hinged to each other at respective ends so that the semicircular portions are rotatable with respect to each other, and a locking system for locking in a releasable manner free ends of the semicircular portions to each other around and in contact to the bottle neck, such that the distance between the free ends of the semicircular portions define the adjustable opening.

According to an embodiment of the present invention, not shown, the semicircular portions are similar to the first **230₁** and second **230₂** semicircular portions; in this embodiment, the locking system may advantageously be based on frictional engaging, the locking system for example comprising mutually engaging barb surface portions (*e.g.*, functionally similar to the previous embodiment) preferably provided at the free ends of the semicircular portions. As an alternative, the locking system may be based on snap-fit engaging, magnetic coupling or the like.

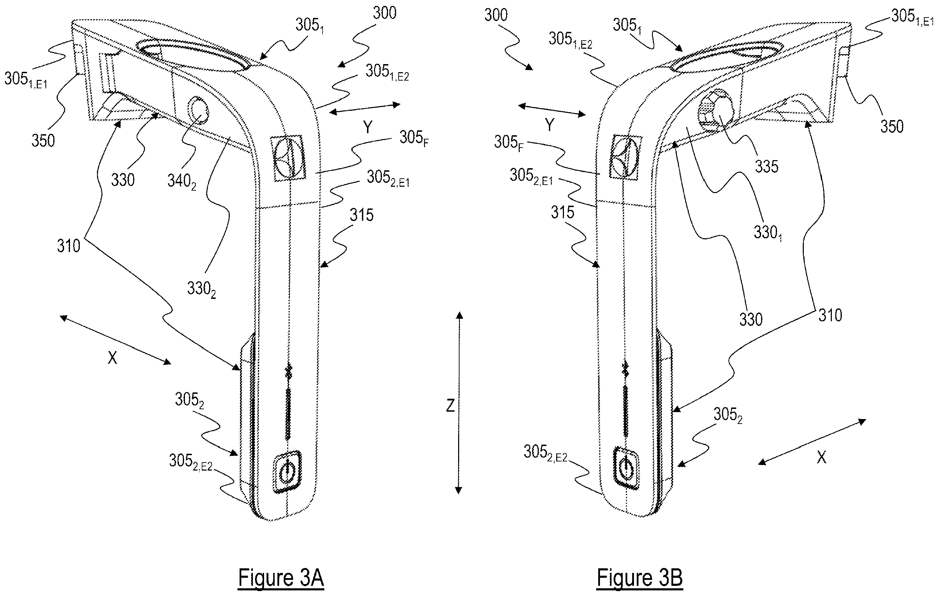

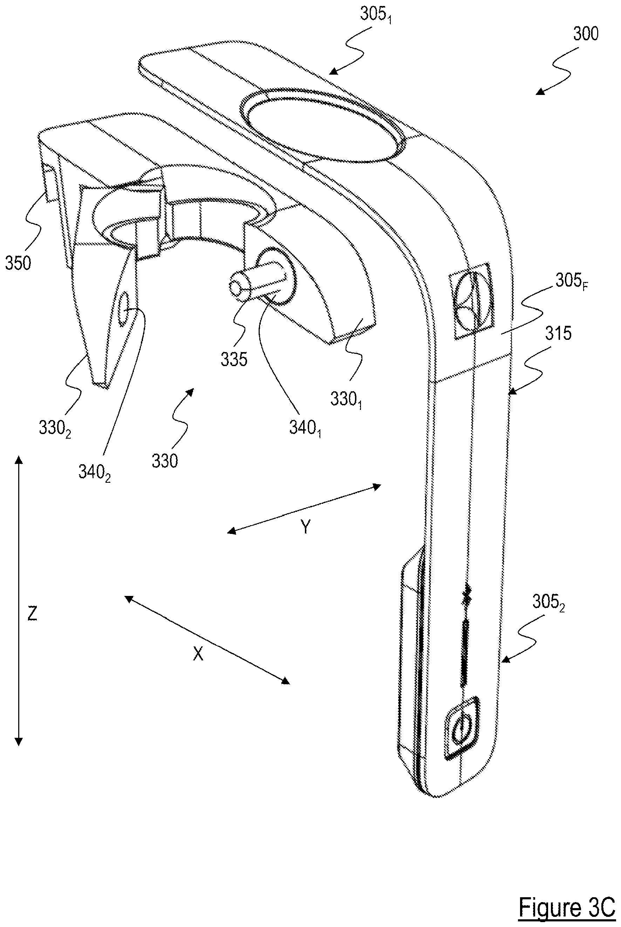

Another embodiment of adjusting clamping member based on two semicircular portions hinged to each other and rotatable with respect to each other is shown in **Figures 3A-3C** and denoted by the number reference **330.** Particularly, **Figures 3A** and **3B** show perspective side views of a device **300** according to another embodiment of the present invention (the device **300** being substantially equivalent to the devices **100** and **200,** exception made for the adjustable clamping member **330** and for structural adaptations of the horizontal **305₁** and vertical arms **305₂** (and particularly of the inner shell **310**) to the adjustable clamping member **330**), and **Figure 3C** shows a perspective and partially exploded side view of the device **300**.

As visible in these figures, the outer shell **315** of the device **300** is preferably similar to the outer shells **115** and **215** of the devices **100** and **200**, respectively, whereas the inner shell **310** of the device **300** comprises two distinct and separate pieces or members (*i.e*., a vertical piece of the inner shell **310** located in correspondence of the vertical arm of the outer shell **315** and a horizontal piece of the inner shell **310** located in correspondence of the horizontal arm of the outer shell **315**). However, as should be readily understood, in alternative embodiments of the present invention, not illustrated, the inner shell **310** may be similar to the inner shells **110** and **210,** *i.e*. with horizontal and vertical arms of the inner shell formed in a single piece and substantially following the whole profile of the outer shell **315;** dually, the possibility that the devices **100** and/or **200** feature inner shells having two or more distinct and separate pieces or members (similarly to the inner shell **310**) is not excluded.

The vertical piece of the inner shell **310** is preferably adapted to house the temperature measuring unit **120,** the wireless communication unit **125** and the wire electrical connections (not visible); the vertical piece of the inner shell **310** is preferably located at the free end of the vertical arm of the outer shell **315** of the device **300** (instead of extending along the whole length of the outer shell **315,** as instead is in the devices **100** and **200**) and identifies, together with the vertical arm of the outer shell **315,** the vertical arm **305₂** of the device **300.**

Preferably, the horizontal piece of the inner shell **310** comprises incorporates (*i.e.*, a portion thereof is adapted to act as) the adjustable clamping member **330.** The adjustable clamping member **330** preferably has first **330₁** and second **330₂** semicircular portions rotatable with respect to each other. Preferably, as illustrated, the first semicircular portion **330₁** is fixed (whereby in the following it will be referred to as fixed semicircular portion **330₁**), whereas the second semicircular portion **330₂** is moveable with respect to the fixed semicircular portion **330₁** (whereby in the following it will be referred to as moveable semicircular portion **330₂**). Differently from the fixed **230₁** and movable **230₂** semicircular portions of the device **200,** which are each one in the form of a C-shaped collar, the fixed **330₁** and movable **330₂** semicircular portions of the device **300** comprise each one a substantially parallepiped-shaped piece (which also forms part of the horizontal piece of the inner shell **310**) with a half-moon shaped hollow. Each half-moon shaped hollow preferably extends along a transversal direction **Y** orthogonal to the longitudinal direction **X;** preferably, as illustrated, the half-moon shaped hollows feature mutually opposite orientations, so that, when the movable semicircular portion **330₂** abuts (or is in proximity of) the fixed semicircular portion **330₁**, the two half-moon shaped hollows define a substantially circular passage for the passage of the bottle neck of the beverage bottle.

Preferably, the fixed **330₁** and movable **330₂** semicircular portions are hinged to each other along a vertical direction **Z** orthogonal to the longitudinal **X** and transversal **Y** directions (the vertical direction **Z** being essentially the direction identified by the vertical arm **305₂**), whereby the movable semicircular portion **330₂** rotates with respect to the fixed semicircular portion **330₁** about the vertical direction **Z** on a rotation plane **X-Y** (*i.e*., the plane identified by the longitudinal **X** and transversal **Y** directions). Therefore, the distance between the fixed **330₁** and movable **330₂** semicircular portions on the rotation plane **X-Y** defines the adjustable opening for accommodating and retaining the bottle neck of the beverage bottle.

Preferably, as illustrated, the adjustable clamping member **330** comprises a locking system for locking in a releasable manner the fixed **330₁** and moveable **330₂** semicircular portions to each other around and in contact to the bottle neck. More preferably, the locking system comprises a screw **335** adapted to be screwed into through holes **340₁**,**340₂**, preferably threaded through holes **340₁**,**340₂**, respectively provided at a free end of the fixed **330₁** and moveable **330₂** semicircular portions (preferably, as illustrated at the curved end adapted to fit the curved connection section that connects the horizontal and vertical arms of the outer shell **315** to each other). As should be readily understood, other mechanical couplings may be provided instead of the screw **335** and/or of the through holes **340₁**,**340₂**: just as an example, other nail-shaped or rod-shaped piece designed to be inserted into material by rotation or pushing may be provided instead of the screw **335.**

Therefore, the moveable semicircular portion **330₂** can be locked at a selected distance from the fixed semicircular portion **330₁** according to a screwing extent of the screw **335** into the through holes **340₁**,**340₂**.

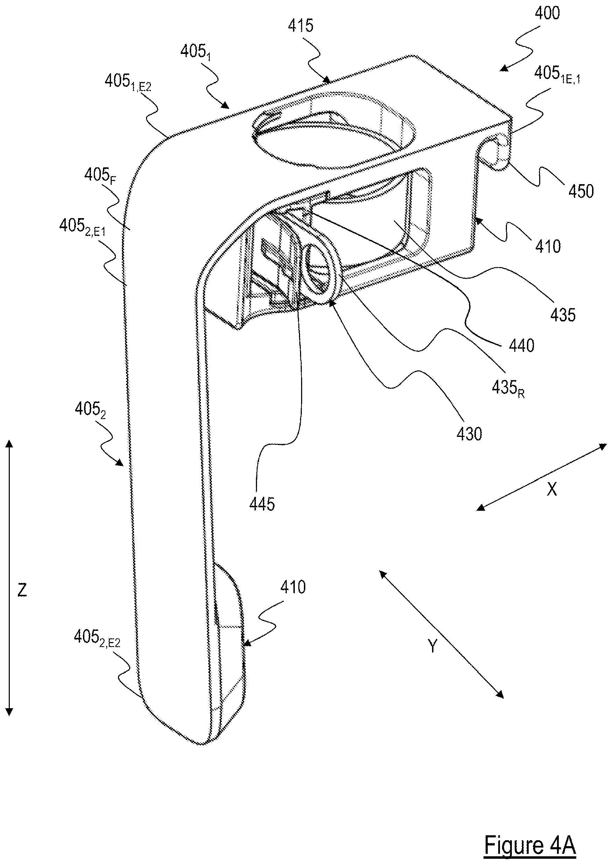

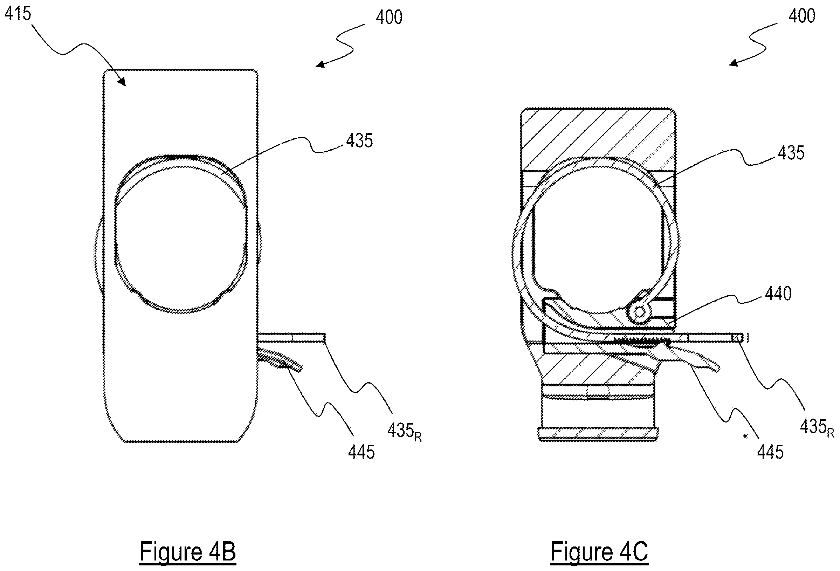

Another example of adjustable clamping member is shown in **Figures 4A-4B** and denoted by the number reference **430.** Particularly, **Figure 4A** shows a perspective side view of a device **400** according to another embodiment of the present invention (the device **400** being substantially equivalent to the device **300,** exception made for the adjustable clamping member **430** and for structural adaptations of the horizontal arm **405₁**, and particularly of the inner shell **410** thereof, to the adjustable clamping member **430**), and **Figures 4B** and **4C** show a view from above and a sectional view from above, respectively, of the device **400.**

As visible in these figures, the device **400** comprises an outer shell **415** that, preferably, is similar to the outer shells **115, 215,** and **315** of the devices **100, 200** and **300,** respectively, and an inner shell **410** that, in the exemplary considered embodiment, is similar to the inner shell **310** of the device **300** (*i.e*. it comprises two distinct and separate pieces or members, namely a vertical piece of the inner shell **410** located in correspondence of the vertical arm of the outer shell **415** and a horizontal piece of the inner shell **410** located in correspondence of the horizontal arm of the outer shell **415**).

Similarly to the vertical piece of the inner shell **310,** the vertical piece of the inner shell **410** is preferably adapted to house the temperature measuring unit **120,** the wireless communication unit **125** and the wire electrical connections (not visible), and is preferably located at the free end of the vertical arm of the outer shell **415.**

Preferably, the horizontal piece of the inner shell **410** comprises a hollow parallelepiped shaped case adapted to house the adjustable clamping member **430.**

As visible in the figures, the adjustable clamping member **430** preferably comprises a tie **435** having a flexible tape section adapted to be housed in the hollow of the horizontal piece of the inner shell **410** in a substantially circular bent configuration, and an end section adapted to be fitted into a head or receptacle **440** (which may be a part of the vertical piece of the inner shell **410** or a separate part housed therein). The flexible tape section of the tie **435** (or a portion thereof) preferably comprises teeth (visible in **Figure 4C****)** adapted to engage with the head **440** to form a ratchet mechanism (similarly to the ratchet mechanism implemented by the bars **235** and the receptacles **240** of the device **200),** so that when a free end of the tie **435** is pulled, the flexible tape section of the tie **435** is fitted into the head **440** and engages with (but is prevented from being removed from) it, thus tightening around the bottle neck of the beverage bottle. Therefore, a fitting extent of the tie **435** into the head **440** defines the adjustable opening of the adjustable clamping member **430.**

Advantageously, as illustrated, in order to make the pulling of the tie **435** easy, the end section of the tie **435** comprises a pulling ring **435_{R}**, into which the user can put his/her finger for exerting the pulling action. In this embodiment, the transversal direction **Y** identifies the direction along which the pulling action is exerted.

Advantageously, the clamping member **430** comprises a release mechanism for allowing the user to selectively release the engaging between the tie **435** and the head **440.** More advantageously, the release mechanism comprises a tab **445** that can be depressed to release the ratchet so that the tie **435** can be loosened (the complete removal of the tie **435** being advantageously prevented by the larger size of the pulling ring **435_{R}** as compared to the size of the rest of the tie **435),** so as to be able to tighten the tie **435** around a bottle neck of a different beverage bottle.

Advantageously, in all the above examples of adjustable clamping member, the adjustable clamping member may comprise, on at least part of a contact region thereof that in use is in contact with the bottle neck, a grip element (not shown) for improving an adherence between the contact region and the bottle neck of the beverage bottle.

Although in the foregoing the retaining function of the bottle neck has been discussed as accomplished by the opening of the horizontal arm or, according to the discussed examples, by adjustable openings defined by adjustable clamping members, implementations may be provided in which no opening is provided in the horizontal arm and the accommodating and retaining function is accomplished entirely by any other suitable clamping member.

Back to the figures a hooking element (or more thereof) may be provided in the device **100** (see the hooking element **150** in **Figures 1A-1C**), and/or in the device **200** (see the hooking element **250** in **Figures 2A-2D**), and/or in the device **300** (see the hooking element **350** in **Figures 3A**-**3C**) and/or in the device **400** (see the hooking element **450** in **Figures 4A** and **4B**) for hooking the device **100,200,300,400** to a support element (not shown in this figure) thereby allowing the beverage bottle to be supported in a hanged position. The hooking element **150,250,350,450** is preferably formed in the horizontal arm **105₁**,**205₁**,**305₁**,**405₁,** the hooking element **150,250,350,450** being for example formed in a single piece with the horizontal arm **105₁**,**205₁**,**305₁**,**405₁**. More preferably (as illustrated), the hooking element **150,250,350,450** is formed in correspondence of the free end **105_{1,E1}**,**205_{1,E1},305_{1,E1}**,**405_{1,E1}** of the horizontal arm **105₁**,**205₁**,**305₁**,**405₁** (so as to form an appendix thereof), and even more preferably it is formed in correspondence of the free end of the horizontal arm of the inner shell **110,210,310,410** (so as to form an appendix thereof) - the opposite end **105_{1,E2}**,**205_{1,E2}**,**305_{1,E2}**,**305_{1,E2}** of the horizontal arm **105₁**,**205₁**,**305₁**,**405₁** being instead close to the flexible region **105_{F}**,**205_{F}**,**305_{F}**,**405_{F}** that, preferably interposed between the end **105_{1,E2}**,**205_{1,E2}**,**305_{1,E2}**,**305_{1,E2}** of the horizontal arm **105₁**,**205₁**,**305₁**,**405₁** and the end **105_{2,E1}**,**205_{2,E1}**,**305_{2,E1}**,**305_{2,E1}** of the vertical arm **105₂**,**205₂**,**305₂**,**405₂** opposite to the free end **105_{2,E2}**,**205_{2,E2}**,**305_{2,E2}**,**305_{2,E2}** of the vertical arm **105₂**,**205₂**,**305₂**,**405₂**, allows resilient flexing of the vertical arm **105₂**,**205₂**,**305₂**,**405₂** with respect to the horizontal arm **105₁**,**205₁**,**305₁**,**405₁**.

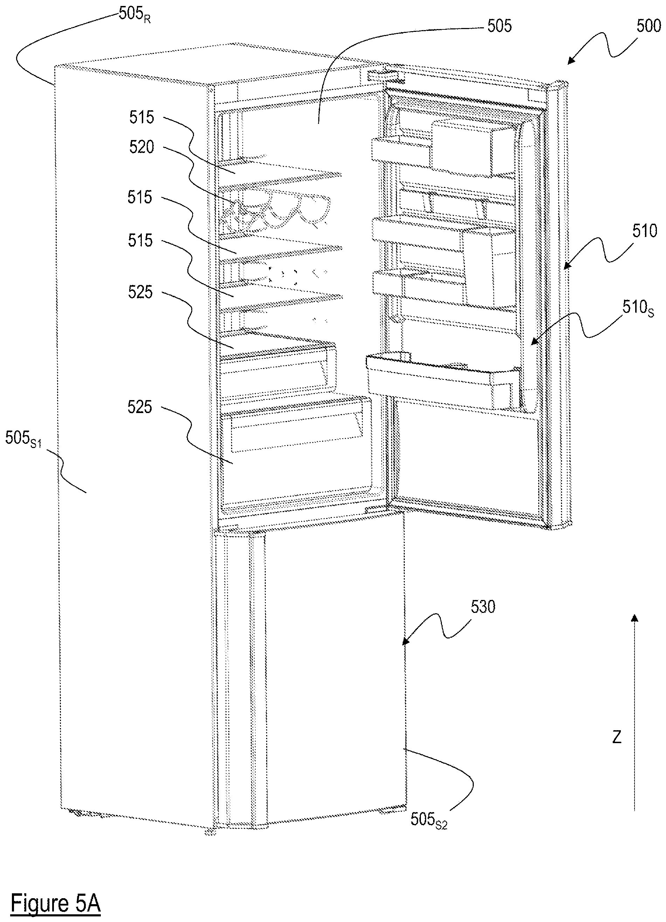

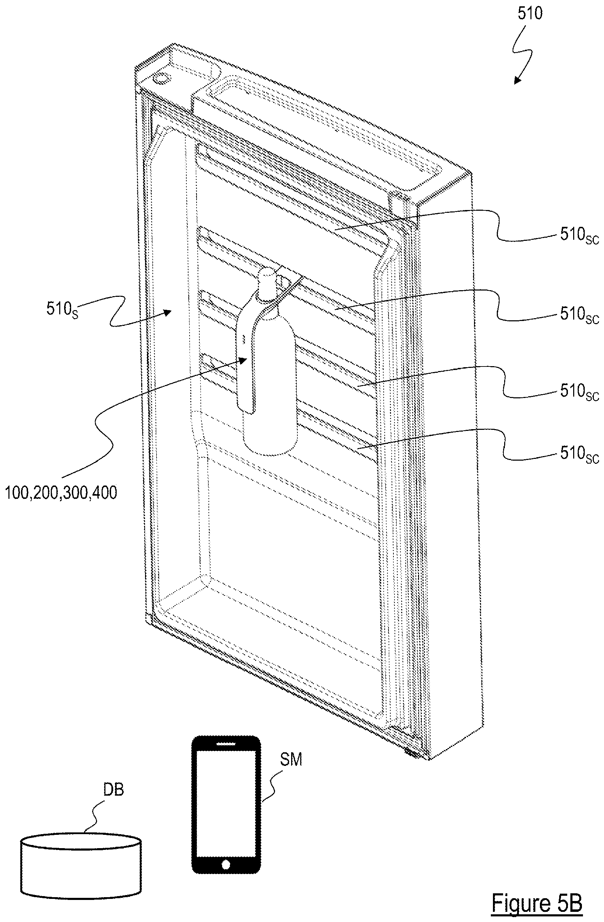

With reference now also to **Figures 5A** and **5B****,** **Figure 5A** shows, according to an embodiment of the present invention, a perspective view of a refrigerating apparatus **500** on which the device **100,200,300,400** may be supported in the hanged position, and **Figure 5B** shows a perspective view of a door of the refrigerating apparatus **500** and the device/bottle assembly supported on it in the hanged position, according to an embodiment of the present invention.

In the following, directional terminology (for example, upper, lower, side, left, right, longitudinal, vertical, transverse) associated with the refrigerating apparatus **500** and components thereof (for example, accessories for the organized positioning of the products to be refrigerated) will be used only in connection with their orientation in the figures, which is assumed to be their orientation of use (*i.e*., the orientation taken when the refrigerating apparatus **500** is installed in the user premises and the accessories mounted on it).

The refrigerating apparatus **500** comprises a refrigerating compartment **505** (for example, a fridge compartment) for housing products to be refrigerated. The fridge compartment **505** is preferably delimited by a rear wall **505_{R}** and side walls **505_{S1}**,**505_{S2}**. Preferably, as herein assumed, the rear wall **505_{R}** extends along a vertical direction **Z** (taking the refrigerating apparatus **500** installed in the user premises as a reference, the refrigerating apparatus **500** has a height along the vertical direction **Z**), and, preferably, the side walls **505_{S1}**,**505_{S2}** extend along the vertical direction **Z** parallel to each other and orthogonal to the rear wall **505_{R}**. The refrigerating apparatus **500** further comprises a door **510** (shown in an open position) for selectively closing the fridge compartment **505,** the door **510** facing the rear wall **505_{R}** (and, in the considered example, being parallel thereto) when the door **510** is in a closed position.

Preferably, although not necessarily, the fridge compartment **505** comprises, within it, one or more accessories for the organized positioning of the products to be refrigerated, such as one or more shelves (such as the shelves **515** exemplary illustrated), and/or one or more bottle-holder components (such as the bottle-holder element **520** exemplary illustrated) and/or one or more drawers (such as the drawers **525** exemplary illustrated) and/or others.

In the exemplary considered embodiment, the refrigerating apparatus **500** comprises a further refrigerating compartment (for example, a freezer compartment) and a door **530** associated with it (the freezer compartment being not visible in the figures as it is covered by the respective door **530** in the closed position). As will be apparent from the following description, the device/bottle assembly may be indistinctly coupled either to the door **510** of the fridge compartment **505** or to the door **530** of the freezer compartment - however, for the sake of exposition simplicity and brevity, only a device/bottle assembly coupled to the door **510** of the fridge compartment **505** will be considered.

The device **100,200,300,400** (and the beverage bottle on which it is mounted) is adapted to be hanged on a support panel coupled to an inner liner of the door **510** (the inner liner being positioned opposite to an external surface of the door **510** that, when the door **510** is closed, faces the external of the fridge compartment **505**). The support panel is indicated in the figure by the number reference **510_{S}**, and is preferably the same as the support panel disclosed in WO 2016/134987 A1.

For the purposes of the present disclosure, the support panel **510_{S}** comprises one or more support elements **510_{SC}**, preferably in the form of crossbars. Each crossbar **510_{SC}** preferably comprises a front zone that defines, together with the front zones of the other crossbars, a front face (or surface) of the support panel **510_{S}**, and a rear zone that defines, together with the rear zones of the other crossbars, a rear face (or surface) of the support panel **510_{S}**.

In the exemplary illustrated embodiment, each crossbar **510_{SC}** defines within it (*i.e*., between the respective front and rear zones) a rail to allow the hooking and the free positioning of the device/bottle assembly along it, with the hooking element **150,250,350,450** that is preferably shaped such as to hook and rest on the rail top edge.

In the exemplary illustrated and discussed embodiments, the devices **100** to **400** comprise first and second arms defining a substantially L-shaped profile. However, another embodiment of the present invention comprises a measuring device (not shown) that comprises a clamping member for accommodating and retaining the bottle neck of the beverage bottle, one or more hooking elements for hooking the device to a support element thereby allowing the beverage bottle to be supported in a hanged position, a temperature measuring unit facing the beverage bottle when the measuring device is coupled to the beverage bottle, and a wireless communication unit coupled to the temperature measuring unit and adapted to wirelessly communicate with a display unit arranged to provide an indication associated with the temperature of the beverage bottle as measured by the temperature measuring unit.

In other words, an embodiment of the present invention comprises a measuring device, for example similar to the devices **100** to **400** (but having different structure), it being understood that all the advantageous features discussed above for the devices **100** to **400** are intended to equivalently apply to such a measuring device. Just as an example, the measuring device may comprise a first part comprising the hooking element(s), and preferably the clamping member, and a second part adapted to accommodate said temperature measuring unit, but with the second part that may for example be in the form of a horizontal plate or vessel or tray or base adapted to house at least partially the beverage bottle in a standing position and with the first part that may be in the form of an elongated member vertically projecting from the first part upwards (taking as reference the measuring device in its operating position). Just as another example, the measuring device may comprise a single part or piece comprising the hooking element(s), the clamping member and the temperature measuring unit, with the measuring device that may for example be in the form of a collar or other non-solid shape adapted to be placed around the bottle neck (or around any other suitable part of the beverage bottle); in alternative embodiments, the measuring device may be in the form of a solid shape associated with a (*e.g*., rigid or resilient) band adapted to fix the measuring device around the bottle neck (or around any other suitable part of the beverage bottle).

As mentioned above, the wireless communication unit **125** is arranged to communicate wirelessly with a display device. The display device may be a mobile telephone, tablet PC or any other portable computing device preferably arranged to run an application for notifying (*e.g.*, displaying) the temperature of the beverage bottle as measured by the temperature measuring unit **120**. As mentioned above, an example of such a display device is a smartphone (illustrated in **Figure 5B** and denoted by the reference **SM**).

According to an embodiment, the application may notify (*e.g*., display) the current temperature information which is transmitted from the temperature measuring unit **120.** For example, the application may display the current temperature of a wine bottle on which the temperature measuring unit **120** has been placed. Additionally or alternatively, the application may determine and display an estimated time for the beverage bottle to reach the target or desired temperature when the device/bottle assembly is placed in the refrigerating apparatus.

Advantageously, the user may be able to specify, and input to the smartphone **SM,** one or more parameters of the beverage bottle.

For example, the user may be able to manually specify a temperature range (or a specific target temperature) which is desired for the beverage bottle. For example, the temperature range may be a predefined temperature range (or a specific target temperature) dependent on the type of the beverage, for example dependent on the type of wine. The user may be able to navigate a menu system of the application to select the type of wine and set the required temperature range. In an example the application may comprise one or more interactive features which enable the user to navigate menus to select a predefined temperature range for a specific type of wine or to enable a user to specify a temperature range (or a specific target temperature) or adjust a predefined temperature range (or a predefined target temperature). In an example, the interactive features may be touch screen features, such as touch screen menu buttons. As better discussed below, the temperature range or the target temperature may be automatically acquired by the application. Regardless of the (manual or automatic) acquisition mode of the target temperature (or temperature range), the application may be advantageously configured to automatically set the device **100-400** with the acquired target temperature (or temperature range), for example when at least part of the smart functionalities of the smartphone **SM** (such as, for example, the notification that the beverage bottle has reached the target temperature) are intended to be implemented in the device **100-400.**

In other examples the application may additionally display other information, for example; the type of wine selected, the target temperature, an estimated time for the wine to reach the target temperature, and a secondary indicator. The secondary indicator may indicate, for example, when the temperature measuring unit detects that the temperature of the wine bottle is below the specified temperature range, when the temperature range is above the specified temperature range or within the specified temperature range. The secondary indicator may further indicate when the temperature measuring unit detects that the wine is at an ideal serving temperature. According to embodiments of the present invention, the secondary indicator may comprise a colour indication (the colour of a display or a display portion of the smartphone **SM** may for example change to indicate via colour whether the measured temperature is within the appropriate range), in addition or in alternative to text or image indications.

In the embodiments described above, the one or more predefined temperature ranges may be predefined temperature ranges dependent on the type of wine, for example, sparkling white wine, light bodied white wine and rose wine (6-8°C), dessert wine (7-10°C), vintage sparkling wine (8- 10°C), medium white wine (9-11 °C), light bodied red wine (10-12°C), full bodied white wine (10- 13°C), medium bodied red wine (14-16°C) and full bodied red wine (16-18°C).

In another example the user may be able to adjust the predefined ranges or specify their own preferred preset ranges based on a plurality of factors, for example, ambient temperature, food type, personal preference, seasonality or grape variety.

In the embodiments described above, the smartphone **SM** (or other mobile computing device) may incorporate a camera or other device which enables it to read labels (for example, barcodes, QR codes or any other written or printed identifications or information) found on bottles, with the smartphone **SM** (or other mobile computing device) that may be equipped with proper text and/or image recognition features for recognizing the information contents of the labels (for example, the target or ideal serving temperatures or temperature ranges of the respective beverage bottles). In an example, data from a barcode (or other label) may be used to access information relating to a wine, for example, appropriate serving temperature range, food matches and the like, which in an example may be displayed at the display unit or application. According to an embodiment, the recognized information content of the label comprises a wine identifier (such as wine name and/or wine type and/or any other identifier allowing to univocally identify the wine), and the target temperature for the identified wine may be retrieved automatically by the smartphone **SM** (*i.e.,* by exploiting the functionalities of the corresponding application running in it) by accessing either a local wine database (for example, a wine database locally stored in the smartphone **SM** and preferably downloaded contextually with the application download and installation), or a remote wine database **DB** (for example, by connection of the smartphone **SM** to the remote wine database through 2G, 3G or 4G cellular connection, and by automatic authentication and access of the smartphone **SM** to the remote wine database **DB** through a valid account registered on the application).

## Claims

1. A device (**100**; **200**; **300**; **400**) comprising:
a first arm (**105₁**; **205₁**; **305₁**; **405₁**) adapted to accommodate and retain a bottle neck of a beverage bottle, such as a wine bottle;
a second arm (**105₂**; **205₂**; **305₂**; **405₂**) extending from the first arm (**105₁**; **205₁**; **305₁**; **405₁**), the second arm (**105₂**; **205₂**; **305₂**; **405₂**) being configured to extend towards a bottle body of the beverage bottle when the device (**100**; **200; 300; 400**) is mounted on the beverage bottle;
a temperature measuring unit (**120**) housed in the second arm (**105₂**; **205₂**; **305₂**; **405₂**), the temperature measuring unit (**120**) facing the bottle body when the device (**100**; **200**; **300**; **400**) is mounted on the beverage bottle, and
a wireless communication unit (**125**) coupled to the temperature measuring unit (**120**),
wherein the wireless communication unit (**125**) is adapted to wirelessly communicate with a display unit arranged to provide an indication associated with the temperature of the beverage bottle as measured by the temperature measuring unit (**120**).

2. The device (**100**; **200; 300; 400**) according to claim 1, wherein the first arm (**105₁**; **205₁**; **305₁**; **405₁**) comprises at least one hooking element (**150; 250; 350; 450**) for hooking the device (**100**; **200; 300; 400**) to a support element thereby allowing the beverage bottle to be supported in a hanged position.

3. The device (**100**; **200; 300; 400)** according to claim 1 or 2, wherein the first arm (**105₁**; **205₁**; **305₁**; **405₁**) comprises an adjustable clamping member (**130; 230; 330; 430**) for accommodating and retaining the bottle neck of the beverage bottle.

4. The device (**100**; **200; 300; 400**) according to claim 1 or 2, wherein the first arm (**105₁**; **205₁**; **305₁**; **405₁**) comprises an opening for accommodating and retaining the bottle neck of the beverage bottle.

5. The device (**100**; **200; 300; 400**) according to claim 4, wherein said opening comprises a first portion for the passage of the bottle neck through it, and a second portion, reduced in size with respect to the first portion, for accommodating and retaining the bottle neck of the beverage bottle.

6. The device (**100**; **200; 300; 400**) according to claim 4, wherein said opening is an adjustable opening that is adjustable according to a size of the bottle neck, the device (**100**; **200; 300; 400**) further comprising an adjustable clamping member (**130; 230; 330; 430**) defining said adjustable opening and retaining the bottle neck of the beverage bottle.

7. The device (**200**) according to claim 6, wherein the adjustable clamping member (**230**) comprises:
- first (**230₁**) and second (**230₂**) semicircular portions moveable with respect to each other along a moving direction (**X**), a distance between the first (**230₁**) and second (**230₂**) semicircular portions along said moving direction (**X**) defining said adjustable opening, and
- a locking system (**235,240**) for locking in a releasable manner the first (**230₁**) and second (**230₂**) semicircular portions to each other around and in contact to the bottle neck.

8. The device (**300**) according to claim 6, wherein the adjustable clamping member (**330**) comprises:
- first (**330₁**) and second (**330₂**) semicircular portions, a first end of the first semicircular portion (**330₁**) being hinged to a first end of the second semicircular portion (**330₂**) whereby the first (**330₁**) and second (**330₂**) semicircular portions are rotatable with respect to each other;
- a locking system (**335**,**340₁**,**340₂**) for locking in a releasable manner a second end of the first semicircular portion (**330₁**) to a second end of the second semicircular portion (**330₂**) around and in contact to the bottle neck, a distance between the second ends of the first and second semicircular portions defining said adjustable opening.

9. The device (**100**; **200; 300; 400**) according to any of the preceding claims, wherein the device arm (**100**; **200; 300; 400**) comprises a flexible region (**105_{F}**; **205_{F}**; **305_{F}**; **405_{F}**) for causing at least part of the second arm (**105₂**; **205₂**; **305₂**; **405₂**) to resiliently flex with respect to the first arm (**105₁**; **205₁**; **305₁**; **405₁**) thereby allowing the second arm (**105₂**; **205₂**; **305₂**; **405₂**) to adapt to a size of the bottle body.

10. The device (**100**; **200; 300; 400**) according to any of the preceding claims, wherein the wireless communication unit (**125**) is adapted to wirelessly communicate with a mobile computing apparatus (**SM**), such as a smartphone, comprising said display unit.

11. The device (**100**; **200; 300; 400**) according to any of the preceding claims, further comprising a temperature indicator located on the second arm (**105₂**; **205₂**; **305₂**; **405₂**) and in wireless or wired communication with the temperature measuring unit (**120**) and configured to provide said indication associated with the temperature of the beverage bottle as measured by the temperature measuring unit (**120**).

12. The device (**100**; **200; 300; 400**) according to any of the preceding claims, wherein the first (**105₁**; **205₁**; **305₁**; **405₁**) and second (**105₂**; **205₂**; **305₂**; **405₂**) arms define a substantially L-shaped profile of the device (**100**; **200; 300; 400).**

13. The device (**100**; **200; 300; 400)** according to any of the preceding claims, wherein said indication associated with the temperature of the beverage bottle provided by the display unit comprises an indication that the beverage bottle has reached a target temperature.

14. A system (**100**; **200; 300; 400; DB; SM**) comprising:
a device (**100**; **200; 300; 400**) according to any one of 1 -13 adapted to be mounted on a beverage bottle, wherein the device (**100**; **200; 300; 400)** comprises a temperature measuring unit (**120**) facing the bottle body when the device (**100**; **200; 300; 400**) is mounted on the beverage bottle, and a wireless communication unit (**125**) coupled to the temperature measuring unit (**120**),
a beverage bottle database (**DB**), and
a mobile computing apparatus (**SM**), such as a smartphone, comprising a display unit, the mobile computing apparatus (**SM**) being adapted to:
- read a label on the beverage bottle;
- access the beverage bottle database (**DB**) and retrieve from it a target temperature for the beverage bottle according to the label being read on the beverage bottle;
- wirelessly communicate with the wireless communication unit (**125**) for receiving the temperature of the beverage bottle as measured by the temperature measuring unit (**120**), and
- notify, for example by displaying on the display unit, an indication associated with the temperature of the beverage bottle as measured by the temperature measuring unit (**120**), wherein said indication associated with the temperature of the beverage bottle comprises an indication of the temperature of the beverage bottle with respect to the target temperature.

15. Refrigerating apparatus (**500**) comprising a refrigerating compartment (**505**) and a door (**510**) for selectively closing the refrigerating compartment (**505**), wherein said door (**510**) comprises an external surface that forms an external appearance of the refrigerating apparatus, and an inner liner, opposite to said external surface and facing, when the door is closed, the refrigerating compartment (**505**), the inner liner comprising one or more support elements (**510_{S}**) for supporting one or more storage elements adapted to store products to be refrigerated, **characterized by** comprising the device (**100**; **200; 300; 400)** according to any claim from 2 to 13, wherein the device (**100**; **200; 300; 400)** is adapted to be hung on said one or more support elements (**510_{S}**) through the at least one hooking element (**150; 250; 350; 450).**

## Patentansprüche

1. Vorrichtung (100; 200; 300; 400), umfassend:
einen ersten Arm (105₁; 205₁; 305₁; 405₁), der dazu eingerichtet ist, einen Flaschenhals einer Getränkeflasche, wie etwa einer Weinflasche, aufzunehmen und zu halten;
einen zweiten Arm (105₂; 205₂; 305₂; 405₂), der sich vom ersten Arm (105₁; 205₁; 305₁; 405₁) erstreckt, wobei der zweite Arm (105₂; 205₂; 305₂; 405₂) dafür ausgelegt ist,
sich in Richtung eines Flaschenkörpers der Getränkeflasche zu erstrecken, wenn die Vorrichtung (100; 200; 300; 400) an der Getränkeflasche montiert ist;
eine Temperaturmesseinheit (120), die im zweiten Arm (105**₂**; 205₂; 305₂; 405₂) untergebracht ist, wobei die Temperaturmesseinheit (120) dem Flaschenkörper zugewandt ist, wenn die Vorrichtung (100; 200; 300; 400) an der Getränkeflasche montiert ist, und
eine Drahtloskommunikationseinheit (125), die mit der Temperaturmesseinheit (120) gekoppelt ist,
wobei die Drahtloskommunikationseinheit (125) dazu eingerichtet ist, drahtlos mit einer Anzeigeeinheit zu kommunizieren, die dazu eingerichtet ist, eine der von der Temperaturmesseinheit (120) gemessenen Temperatur der Getränkeflasche zugeordnete Anzeige bereitzustellen.

2. Vorrichtung (100; 200; 300; 400) nach Anspruch 1, wobei der erste Arm (105₁; 205₁; 305₁; 405₁) mindestens ein Einhakelement (150; 250; 350; 450) zum Einhaken der Vorrichtung (100; 200; 300; 400) an einem Trägerelement umfasst, wodurch die Getränkeflasche in einer hängenden Position gehalten werden kann.

3. Vorrichtung (100; 200; 300; 400) nach Anspruch 1 oder 2, wobei der erste Arm (105₁; 205₁; 305₁; 405₁) ein einstellbares Klemmelement (130; 230; 330; 430) zum Aufnehmen und Halten des Flaschenhalses der Getränkeflasche umfasst.

4. Vorrichtung (100; 200; 300; 400) nach Anspruch 1 oder 2, wobei der erste Arm (105₁; 205₁; 305₁; 405₁) eine Öffnung zum Aufnehmen und Halten des Flaschenhalses der Getränkeflasche umfasst.

5. Vorrichtung (100; 200; 300; 400) nach Anspruch 4, wobei die Öffnung einen ersten Abschnitt für den Durchgang des Flaschenhalses und einen zweiten, gegenüber dem ersten Abschnitt verkleinerten Abschnitt zum Aufnehmen und Halten des Flaschenhalses der Getränkeflasche umfasst.

6. Vorrichtung (100; 200; 300; 400) nach Anspruch 4, wobei die Öffnung eine einstellbare Öffnung ist, die entsprechend einer Größe des Flaschenhalses einstellbar ist, wobei die Vorrichtung (100; 200; 300; 400) ferner ein einstellbares Klemmelement (130; 230; 330; 430) umfasst, das die einstellbare Öffnung definiert und den Flaschenhals der Getränkeflasche hält.

7. Vorrichtung (200) nach Anspruch 6, wobei das einstellbare Klemmelement (230) umfasst:
einen ersten (230₁) und einen zweiten (230₂) halbkreisförmigen Abschnitt, die relativ zueinander entlang einer Bewegungsrichtung (X) beweglich sind, wobei ein Abstand zwischen dem ersten (230₁) und dem zweiten (230₂) halbkreisförmigen Abschnitt entlang der Bewegungsrichtung (X) die einstellbare Öffnung definiert, und
ein Verriegelungssystem (235, 240) zum lösbaren Verriegeln des ersten (230₁) und des zweiten (230₂) halbkreisförmigen Abschnitts aneinander um den Flaschenhals herum und in Kontakt mit diesem.

8. Vorrichtung (300) nach Anspruch 6, wobei das einstellbare Klemmelement (330) umfasst:
einen ersten (330₁) und einen zweiten (330₂) halbkreisförmigen Abschnitt, wobei ein erstes Ende des ersten halbkreisförmigen Abschnitts (330₁) an einem ersten Ende des zweiten halbkreisförmigen Abschnitts (330₂) angelenkt ist, wodurch der erste (330₁) und der zweite (330₂) halbkreisförmige Abschnitt in Bezug zueinander drehbar sind;
ein Verriegelungssystem (335, 340₁, 340₂) zum lösbaren Verriegeln eines zweiten Endes des ersten halbkreisförmigen Abschnitts (330₁) mit einem zweiten Ende des zweiten halbkreisförmigen Abschnitts (330₂) um den Flaschenhals herum und in Kontakt mit diesem, wobei ein Abstand zwischen den zweiten Enden des ersten und des zweiten halbkreisförmigen Abschnitts die einstellbare Öffnung definiert.

9. Vorrichtung (100; 200; 300; 400) nach einem der vorhergehenden Ansprüche, wobei der Vorrichtungsarm (100; 200; 300; 400) einen flexiblen Bereich (105_{F}; 205_{F}; 305_{F}; 405_{F}) umfasst, zum Bewirken, dass sich zumindest ein Teil des zweiten Arms (105₂; 205₂; 305₂; 405₂) in Bezug auf den ersten Arm (105₁; 205₁; 305₁; 405₁) elastisch biegt, wodurch sich der zweite Arm (105₂; 205₂; 305₂; 405₂) an eine Größe des Flaschenkörpers anpassen kann.

10. Vorrichtung (100; 200; 300; 400) nach einem der vorhergehenden Ansprüche, wobei die Drahtloskommunikationseinheit (125) dazu eingerichtet ist, drahtlos mit einer mobilen Rechenvorrichtung (SM), wie etwa einem Smartphone, die die Anzeigeeinheit umfasst, zu kommunizieren.

11. Vorrichtung (100; 200; 300; 400) nach einem der vorhergehenden Ansprüche, ferner umfassend einen Temperaturanzeiger, der sich am zweiten Arm (105₂; 205₂; 305₂; 405₂) befindet und in drahtloser oder drahtgebundener Kommunikation mit der Temperaturmesseinheit (120) steht und dafür ausgelegt ist, eine Anzeige bereitzustellen, die der von der Temperaturmesseinheit (120) gemessenen Temperatur der Getränkeflasche zugeordnet ist.

12. Vorrichtung (100; 200; 300; 400) nach einem der vorhergehenden Ansprüche, wobei der erste (105₁; 205₁; 305₁; 405₁) und der zweite (105₂; 205₂; 305₂; 405₂) Arm ein im Wesentlichen L-förmiges Profil der Vorrichtung (100; 200; 300; 400) definieren.

13. Vorrichtung (100; 200; 300; 400) nach einem der vorhergehenden Ansprüche, wobei die der Temperatur der Getränkeflasche zugeordnete Anzeige, die von der Anzeigeeinheit bereitgestellt wird, eine Anzeige darüber umfasst, dass die Getränkeflasche eine Zieltemperatur erreicht hat.

14. System (100; 200; 300; 400; DB; SM), umfassend:
eine Vorrichtung (100; 200; 300; 400) nach einem der Ansprüche 1 bis 13, die dazu eingerichtet ist, an einer Getränkeflasche montiert zu werden, wobei die Vorrichtung (100; 200; 300; 400) eine Temperaturmesseinheit (120), die dem Flaschenkörper zugewandt ist, wenn die Vorrichtung (100; 200; 300; 400) an der Getränkeflasche montiert ist, und eine Drahtloskommunikationseinheit (125) umfasst, die mit der Temperaturmesseinheit (120) gekoppelt ist,
eine Getränkeflaschendatenbank (DB), und
eine mobile Rechenvorrichtung (SM), wie etwa ein Smartphone, die eine Anzeigeeinheit umfasst, wobei die mobile Rechenvorrichtung (SM) für folgende Vorgänge eingerichtet ist:
Auslesen eines Etiketts auf einer Getränkeflasche;
Zugreifen auf die Getränkeflaschendatenbank (DB) und Abrufen aus dieser eine Zieltemperatur für die Getränkeflasche entsprechend dem auf der Getränkeflasche ausgelesenen Etikett;
drahtloses Kommunizieren mit der Drahtloskommunikationseinheit (125) zum Empfangen der von der Temperaturmesseinheit (120) gemessenen Temperatur der Getränkeflasche, und
Melden, zum Beispiel durch Anzeigen auf der Anzeigeeinheit, einer der von der Temperaturmesseinheit (120) gemessenen Temperatur der Getränkeflasche zugeordneten Anzeige, wobei die der Temperatur der Getränkeflasche zugeordnete Anzeige eine Anzeige der Temperatur der Getränkeflasche in Bezug auf die Zieltemperatur umfasst.

15. Kühlvorrichtung (500), umfassend ein Kühlabteil (505) und eine Tür (510) zum selektiven Verschließen des Kühlabteils (505), wobei die Tür (510) eine Außenfläche, die ein äußeres Erscheinungsbild der Kühlvorrichtung bildet, und eine Innenauskleidung umfasst, die der Außenfläche gegenüberliegt und dem Kühlabteil (505) zugewandt ist, wenn die Tür geschlossen ist, wobei die Innenauskleidung ein oder mehrere Trägerelemente (510ₛ) zum Tragen eines oder mehrerer Speicherelemente umfasst, die zum Speichern von zu kühlenden Produkten eingerichtet sind, **dadurch gekennzeichnet, dass** sie die Vorrichtung (100; 200; 300; 400) nach einem der Ansprüche 2 bis 13 umfasst, wobei die Vorrichtung (100; 200; 300; 400) dazu eingerichtet ist, an dem einen oder den mehreren Trägerelementen (510ₛ) über das mindestens eine Einhakelement (150; 250; 350; 450) aufgehängt zu werden.

## Revendications

1. Dispositif (100 ; 200 ; 300 ; 400) comportant :
un premier bras (105₁ ; 205₁ ; 305₁ ; 405₁) prévu pour accueillir et retenir un goulot d'une bouteille de boisson, telle qu'une bouteille de vin ;
un second bras (105₂ ; 205₂ ; 305₂ ; 405₂) s'étendant à partir du premier bras (105₁ ; 205₁ ; 305₁ ; 405₁), le second bras (105₂ ; 205₂ ; 305₂ ; 405₂) étant configuré pour s'étendre en direction d'un corps de bouteille de la bouteille de boisson lorsque le dispositif (100 ; 200 ; 300 ; 400) est monté sur la bouteille de boisson ; une unité (120) de mesure de température logée dans le second bras (105₂ ; 205₂ ; 305₂ ; 405₂), l'unité (120) de mesure de température faisant face au corps de bouteille lorsque le dispositif (100 ; 200 ; 300 ; 400) est monté sur la bouteille de boisson, et
une unité (125) de communication sans fil couplée à l'unité (120) de mesure de température,
l'unité (125) de communication sans fil étant prévue pour communiquer sans fil avec une unité d'affichage disposée pour fournir une indication associée à la température de la bouteille de boisson telle que mesurée par l'unité (120) de mesure de température.

2. Dispositif (100 ; 200 ; 300 ; 400) selon la revendication 1, le premier bras (105₁ ; 205₁ ; 305₁ ; 405₁) comportant au moins un élément (150 ; 250 ; 350 ; 450) d'accrochage servant à accrocher le dispositif (100 ; 200 ; 300 ; 400) à un élément de soutien, permettant ainsi à la bouteille de boisson d'être soutenue dans une position suspendue.

3. Dispositif (100 ; 200 ; 300 ; 400) selon la revendication 1 ou 2, le premier bras ; 205₁ ; 305₁ ; 405₁) comportant un organe (130 ; 230 ; 330 ; 430) de serrage réglable destiné à accueillir et à retenir le goulot de la bouteille de boisson.

4. Dispositif (100 ; 200 ; 300 ; 400) selon la revendication 1 ou 2 ;
le premier bras (105₁ ; 205₁ ; 305₁ ; 405₁) comportant une ouverture destinée à accueillir et à retenir le goulot de la bouteille de boisson.

5. Dispositif (100 ; 200 ; 300 ; 400) selon la revendication 4, ladite ouverture comportant une première partie destinée au passage du goulot à travers celle-ci, et une seconde partie, réduite en taille par rapport à la première partie, destinée à accueillir et à retenir le goulot de la bouteille de boisson.

6. Dispositif (100 ; 200 ; 300 ; 400) selon la revendication 4, ladite ouverture étant une ouverture réglable qui est réglable en fonction d'une taille du goulot, le dispositif (100 ; 200 ; 300 ; 400) comportant en outre un organe (130 ; 230 ; 330 ; 430) de serrage réglable définissant ladite ouverture réglable et maintenant le goulot de la bouteille de boisson.

7. Dispositif (200) selon la revendication 6, l'organe (230) de serrage réglable comportant :
- des première (230₁) et seconde (230₂) parties semi-circulaires mobiles l'une par rapport à l'autre suivant une direction (X) de déplacement, une distance entre les première (230₁) et seconde (230₂) parties semi-circulaires suivant ladite direction (X) de déplacement définissant ladite ouverture réglable, et
- un système (235, 240) de verrouillage servant à verrouiller de manière libérable les première (230₁) et seconde (230₂) parties semi-circulaires l'une par rapport à l'autre autour et au contact du goulot.

8. Dispositif (300) selon la revendication 6, l'organe (330) de serrage réglable comportant :
- des première (330₁) et seconde (330₂) parties semi-circulaires, une première extrémité de la première partie semi-circulaire (330₁) étant articulée à une première extrémité de la seconde partie semi-circulaire (330₂), les première (330₁) et seconde (330₂) parties semi-circulaires pouvant ainsi pivoter l'une par rapport à l'autre ;
- un système (335, 340₁, 340₂) de verrouillage servant à verrouiller de manière libérable une seconde extrémité de la première partie semi-circulaire (330₁) par rapport à une seconde extrémité de la seconde partie semi-circulaire (330₂) autour et au contact du goulot, une distance entre les secondes extrémités des première et seconde parties semi-circulaires définissant ladite ouverture réglable.

9. Dispositif (100 ; 200 ; 300 ; 400) selon l'une quelconque des revendications précédentes, le bras du dispositif (100 ; 200 ; 300 ; 400) comportant une région souple (105_{F} ; 205_{F} ; 305_{F} ; 405_{F}) servant à amener au moins une partie du second bras (105₂ ; 205₂ ; 305₂ ; 405₂) à fléchir élastiquement par rapport au premier bras ; 205₁ ; 305₁ ; 405₁), permettant ainsi au second bras (105₂ ; 205₂ ; 305₂ ; 405₂) de s'adapter à une taille du corps de bouteille.

10. Dispositif (100 ; 200 ; 300 ; 400) selon l'une quelconque des revendications précédentes, l'unité (125) de communication sans fil étant prévue pour communiquer sans fil avec un appareil informatique mobile (SM), tel qu'un ordiphone, comportant ladite unité d'affichage.

11. Dispositif (100 ; 200 ; 300 ; 400) selon l'une quelconque des revendications précédentes, comportant en outre un indicateur de température situé sur le second bras (105₂ ; 205₂ ; 305₂ ; 405₂) et en communication sans fil ou filaire avec l'unité (120) de mesure de température et configuré pour fournir ladite indication associée à la température de la bouteille de boisson telle que mesurée par l'unité (120) de mesure de température.

12. Dispositif (100 ; 200 ; 300 ; 400) selon l'une quelconque des revendications précédentes, les premier (105₁ ; 205₁ ; 305₁ ; 405₁) et second bras (105₂ ; 205₂ ; 305₂ ; 405₂) définissant un profil sensiblement en forme de L du dispositif (100 ; 200 ; 300 ; 400).

13. Dispositif (100 ; 200 ; 300 ; 400) selon l'une quelconque des revendications précédentes, ladite indication associée à la température de la bouteille de boisson fournie par l'unité d'affichage comportant une indication du fait que la bouteille de boisson a atteint une température cible.

14. Système (100 ; 200 ; 300 ; 400 ; DB ; SM) comportant :
un dispositif (100 ; 200 ; 300 ; 400) selon l'une quelconque des revendications 1 à 13 prévu pour être monté sur une bouteille de boisson, le dispositif (100 ; 200 ; 300 ; 400) comportant une unité (120) de mesure de température faisant face au corps de bouteille lorsque le dispositif (100 ; 200 ; 300 ; 400) est monté sur la bouteille de boisson, et une unité (125) de communication sans fil couplée à l'unité (120) de mesure de température, une base (DB) de données de bouteilles de boisson, et un appareil informatique mobile (SM), tel qu'un ordiphone, comportant une unité d'affichage, l'appareil informatique mobile (SM) étant prévu pour :
- lire une étiquette sur la bouteille de boisson ;
- accéder à la base (DB) de données de bouteilles de boisson et en extraire une température cible pour la bouteille de boisson selon l'étiquette qui est lue sur la bouteille de boisson ;
- communiquer sans fil avec l'unité (125) de communication sans fil pour recevoir la température de la bouteille de boisson telle que mesurée par l'unité (120) de mesure de température, et
- notifier, par exemple en l'affichant sur l'unité d'affichage, une indication associée à la température de la bouteille de boisson telle que mesurée par l'unité (120) de mesure de température, ladite indication associée à la température de la bouteille de boisson comportant une indication de la température de la bouteille de boisson par rapport à la température cible.

15. Appareil réfrigérant (500) comportant un compartiment réfrigérant (505) et une porte (510) servant à fermer sélectivement le compartiment réfrigérant (505), ladite porte (510) comportant une surface externe qui forme un aspect externe de l'appareil réfrigérant, et un revêtement intérieur, opposé à ladite surface externe et faisant face, lorsque la porte est fermée, au compartiment réfrigérant (505), le revêtement intérieur comportant un ou plusieurs éléments (510ₛ) de soutien destinés à soutenir un ou plusieurs éléments de rangement prévus pour ranger des produits à réfrigérer, **caractérisé en ce qu'**il comporte le dispositif (100 ; 200 ; 300 ; 400) selon l'une quelconque des revendications 2 à 13, le dispositif (100 ; 200 ; 300 ; 400) étant prévu pour être suspendu sur ledit ou lesdits éléments (510ₛ) de soutien par l'intermédiaire de l'élément ou des éléments (150 ; 250 ; 350 ; 450) d'accrochage.
